(19) Europäisches Patentamt
European Patent Office
Office européen des brevets

(11) **EP 4 471 707 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*G06T 5/00* (2024.01)

(21) Application number: 23746075.3

(22) Date of filing: 16.01.2023

(86) International application number:
PCT/CN2023/072402

(87) International publication number:
WO 2023/143193 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.01.2022 CN 202210109939

(71) Applicant: Hangzhou Microimage Software Co.,
Ltd.
Hangzhou, Zhejiang 310051 (CN)

(72) Inventors:
• YAN, Yu
  Hangzhou, Zhejiang 310051 (CN)
• JIA, Haiwei
  Hangzhou, Zhejiang 310051 (CN)
• JIN, Haowen
  Hangzhou, Zhejiang 310051 (CN)
• TANG, Jie
  Hangzhou, Zhejiang 310051 (CN)

(74) Representative: Epping - Hermann - Fischer
Patentanwaltsgesellschaft mbH
Schloßschmidstraße 5
80639 München (DE)

(54) **METHOD AND APPARATUS FOR CORRECTING THERMOGRAPHIC IMAGE**

(57) A method and an apparatus for correcting a thermal imaging image are provided, the method includes: determining a motion state of a thermal imaging device corresponding to a thermal image to be corrected; determining a noise interference pixel from the thermal image to be corrected by using a target screening condition corresponding to the motion state; performing correction on the thermal image to be corrected based on the noise interference pixel. Target screening conditions corresponding to different motion states are different. That is, the noise interference pixels corresponding to different motion states can be determined for different motion states of the thermal imaging device, and then the thermal image to be corrected can be corrected by using the noise interference pixels corresponding to the motion state, thereby achieving an effect of accurately correcting the thermal image to be corrected in different motion states, and improving the accuracy of image correction.

```
┌─────────────────────────────────────────┐
│ determining a motion state of a thermal  │──S101
│ imaging device corresponding to a        │
│ thermal image to be corrected            │
└─────────────────────────────────────────┘
                    │
                    ▼
┌─────────────────────────────────────────┐
│ determining a noise interference pixel   │──S102
│ from the thermal image to be corrected   │
│ by using a target screening condition    │
│ corresponding to the motion state        │
└─────────────────────────────────────────┘
                    │
                    ▼
┌─────────────────────────────────────────┐
│ performing correction on the thermal     │──S103
│ image to be corrected based on the       │
│ noise interference pixel                 │
└─────────────────────────────────────────┘
```

Fig. 1

**Description**

The present application claims the priority to a Chinese patent application No. 202210109939.6 filed with the State Intellectual Property Office of People's Republic of China on January 29, 2022, and entitled "Method and apparatus for correcting thermal imaging image", which is incorporated herein by reference in its/their entirety.

**TECHNICAL FIELD**

The present application relates to the technical field of image processing, and in particular to a method and apparatus for correcting a thermal imaging image.

**BACKGROUND**

Infrared thermal imaging devices generally have non-uniform response problems, which are mainly manifested in the serious interference of fixed pattern noise in the image. Therefore, it is very necessary to correct the non-uniformity of the image. At present, the process of the method for non-uniform correction of image is as follows: for an image collected by the infrared thermal imaging device being in a motion state, an edge detection operator is used to perform edge detection on the image, and a detected edge is used as a target contour. In order to avoid the target contour being introduced into the correction result by mistake, all of edge positions are not calculated for the fixed pattern noise, and the correction matrix that can offset the fixed pattern noise is obtained in a form of iteration for each frame of the image, and the correction matrix is superimposed on the original image to achieve non-uniform correction.

For an image collected by the infrared thermal imaging device being in a static state, the grayscale difference between each pixel of the image and its four neighborhood pixels are calculated, and the fixed pattern noise calculation is performed on pixels of which the grayscale differences to their respective neighborhood pixels are within a preset interval. Then a correction matrix that can offset the fixed pattern noise is obtained in a form of iteration for each frame of the image, and the correction matrix is superimposed on the original image to achieve non-uniform correction.

However, for the image corresponding to the above-mentioned motion state, if there is a high-temperature target in the scene, the image edge in the low-temperature area will be difficult to be detected, and there will be a problem of missed image edge detection. If the overall temperature of the scene is low, it will lead to detect too many edges of the image, and there will be a problem of excessive image edge detection. The problem of excessive image edge detection and the problem of missed image edge detection will both cause the calculated correction matrix to have a large error, resulting in a wrong image correction. In addition, since the above-mentioned image correction method is to calculate the grayscale difference for each pixel of the entire image without distinction, this can easily cause the calculated correction matrix to include the target information in the image, which in turn causes ghosting in the corrected image. For the image corresponding to the above-mentioned static state, since the fixed pattern noise calculation is performed on the pixels of which the grayscale differences to their respective neighborhood pixels are within the preset interval, the accuracy of image correction is low. Therefore, the current method of image non-uniform correction has the problem of low image correction accuracy.

**SUMMARY**

The objects of the embodiments of the present application are to provide a method and an apparatus for correcting a thermal imaging image to improve the accuracy of image correction.

In a first aspect, an embodiment of the present application provides a method for correcting a thermal imaging image, which includes:

determining a motion state of a thermal imaging device corresponding to a thermal image to be corrected;

determining a noise interference pixel from the thermal image to be corrected by using a target screening condition corresponding to the motion state; wherein the target screening conditions corresponding to different motion states are different;

performing correction on the thermal image to be corrected based on the noise interference pixel.

Optionally, the method further includes:

determining a neighboring difference of each pixel in the thermal image to be corrected relative to a neighboring pixel of the pixel;

wherein, constraints for neighboring difference of the noise interference pixel relative to a neighboring pixel of the noise interference pixel are different in the target screening conditions corresponding to the different motion states.

Optionally, the motion states include at least two of the following motion states: a high-speed motion state, a low-speed motion state, and a static state;

the target screening condition includes that: if a grayscale of a pixel in the thermal image to be corrected and a grayscale of a pixel at a corresponding position in a reference frame thermal image indicate different targets, and a difference value between a neighboring difference of the pixel in the thermal image to be corrected and a neighboring difference of the pixel at the corresponding position in the reference frame thermal image is less than a preset difference value threshold, the pixel at a corresponding position in the thermal image to be corrected is determined as the noise interference pixel;

the constraints for the neighboring difference of the noise interference pixel relative to the neighboring pixel of the noise interference pixel being different in the target screening conditions corresponding to the different motion states, includes: a preset difference value threshold corresponding to the high-speed motion state is greater than a preset difference value threshold corresponding to the low-speed motion state, and/or the preset difference value threshold corresponding to the low-speed motion state is greater than a preset difference value threshold corresponding to the static state.

Optionally, the target screening condition corresponding to the high-speed motion state further includes that: if the grayscale of the pixel in the thermal image to be corrected and the grayscale of the pixel at the corresponding position in the reference frame thermal image indicate the same target, and the difference value between the neighboring difference of the pixel in the thermal image to be corrected and the neighboring difference of the pixel at the corresponding position in the reference frame thermal image is less than the preset difference value threshold, the pixel at the corresponding position in the thermal image to be corrected is determined as the noise interference pixel;
in the target screening condition corresponding to the high-speed motion state, the preset difference value threshold corresponding to a case where the grayscale of the pixel in the thermal image to be corrected and the grayscale of the pixel at the corresponding position in the reference frame thermal image indicate the different targets is greater than the preset difference value threshold corresponding to a case where the grayscale of the pixel in the thermal image to be corrected and the grayscale of the pixel at the corresponding position in the reference frame thermal image indicate the same target.
Optionally, the target screening condition further includes that: the sum of the neighboring difference of the pixel in the thermal image to be corrected and the neighboring difference of the pixel at the corresponding position in the reference frame thermal image is less than a preset sum threshold;
the constraints for the neighboring difference of the noise interference pixel relative to the neighboring pixel of the noise interference pixel being different in the target screening conditions corresponding to the different motion states, includes: a preset sum threshold corresponding to the high-speed motion state is greater than a preset sum threshold corresponding to the low-speed motion state, and/or the preset sum threshold corresponding to the low-speed motion state is greater than a preset sum threshold corresponding to the static state.
Optionally, the target screening condition corresponding to the high-speed motion state further includes:
in the target screening condition corresponding to the high-speed motion state, a preset sum threshold corresponding to a case where a grayscale of the pixel in the thermal image to be corrected and a grayscale of the pixel at the corresponding position in the reference frame thermal image indicate different targets is greater than a preset sum threshold corresponding to a case where a grayscale of a pixel in the thermal image to be corrected and a grayscale of a pixel at a corresponding position in the reference frame thermal image indicate a same target.
Optionally, performing the correction on the thermal image to be corrected based on the noise interference pixel includes:

for each pixel in the thermal image to be corrected with a noise interference pixel existed in the neighborhood of the pixel, determining a neighboring difference between the pixel and the noise interference pixel existed in the neighborhood of the pixel;

if the neighboring difference meets a preset difference condition, determining the noise interference pixel as a pixel to be corrected; wherein the preset difference condition indicates that the pixel and the noise interference pixel existed in the neighborhood of the pixel correspond to the same target, and preset difference conditions corresponding to the different motion states are different;

determining a correction parameter corresponding to the pixel to be corrected based on the neighboring difference;

performing correction on the pixel to be corrected based on the correction parameter to obtain a corrected thermal image.

Optionally, the preset difference condition includes that the neighboring difference is not greater than a preset difference threshold, and the preset difference conditions corresponding to the different motion states being different includes that: a preset difference threshold corresponding to the high-speed motion state is greater than a preset difference threshold corresponding to the low-speed motion state, and/or the preset difference threshold corresponding to the low-speed motion state is greater than a preset difference threshold corresponding to the static state.

Optionally, determining the correction parameter corresponding to the pixel to be corrected based on the neighboring difference includes:

determining a correction parameter corresponding to the pixel to be corrected based on the neighboring difference and a preset correction degree parameter corresponding to the motion state; wherein the preset correction degree parameters corresponding to different motion states are different.

Optionally, the preset correction degree parameters corresponding to the different motion states being different, includes: a value of the preset correction degree parameter corresponding to the high-speed motion state is greater than a value of the preset correction degree parameter corresponding to the low-speed motion state, and/or the value of the preset correction degree parameter corresponding to the low-speed motion state is greater than a value of the preset correction degree parameter corresponding to the static state.

Optionally, determining the motion state of the thermal imaging device corresponding to the thermal image to be corrected includes:

acquiring multiple groups of angular velocities of the thermal imaging device corresponding to the thermal image to be corrected, wherein each group of angular velocities includes at least one of a swing angular velocity, a tilt angular velocity, and a flip angular velocity;

calculating a range and a sum for each type of the angular velocity;

determining whether the motion state of the thermal imaging device is a high-speed motion state, a low-speed motion state or a static state based on the range and the sum.

Optionally, determining whether the motion state of the thermal imaging device is the high-speed motion state, the low-speed motion state or the static state based on the range and the sum includes:

if the range is not less than a first preset range threshold and the sum is not less than a first preset sum threshold, determining the motion state of the thermal imaging device as the high-speed motion state;

if the range is less than the first preset range threshold and the sum is less than the first preset sum threshold, and when the range is greater than a second preset range threshold and the sum is greater than a second preset sum threshold, determining the motion state of the thermal imaging device as the low-speed motion state; wherein the first preset range threshold is greater than the second preset range threshold, and the first preset sum threshold is greater than the second preset sum threshold;

if the range is not greater than the second preset range threshold and the sum is not greater than the second preset sum threshold, determining the motion state of the thermal imaging device as the static state.

Optionally, the thermal image to be corrected is a target thermal image to be processed, or the thermal image to be corrected is a preliminarily corrected thermal image obtained by performing preliminary correction on the target thermal image.

Optionally, the method further includes:

acquiring an accumulating correction parameter obtained by accumulating a correction parameter corresponding to each of previous thermal images of the target thermal image;

performing the preliminary correction on the target thermal image based on the accumulating correction parameter to obtain the preliminarily corrected thermal image.

In a second aspect, an embodiment of the present application provides an apparatus for correcting a thermal imaging image, which includes:

a motion state determining module, configured to determine a motion state of a thermal imaging device corresponding to a thermal image to be corrected;

an interference pixel determining module, configured to determine a noise interference pixel from the thermal image to be corrected by using a target screening condition corresponding to the motion state; wherein target screening conditions corresponding to different motion states are different;

an image correcting module, configured to perform correction on the thermal image to be corrected based on the noise interference pixel.

Optionally, the apparatus further includes:

a neighboring difference determining module, configured to determine a neighboring difference of each pixel in the thermal image to be corrected relative to a neighboring pixel of the pixel; wherein, constraints for neighboring difference of the noise interference pixel relative to a neighboring pixel of the noise interference pixel are different in the target screening conditions corresponding to the different motion states;

the motion states include at least two of the following motion states: a high-speed motion state, a low-speed motion state, and a static state;

the target screening condition includes that if a grayscale of a pixel in the thermal image to be corrected and a grayscale of a pixel at a corresponding position in a reference frame thermal image indicate different targets, and a difference value between a neighboring difference of the pixel in the thermal image to be corrected and a neighboring difference of the pixel at the corresponding position in the reference frame thermal image is less than a preset difference value threshold, the pixel at the corresponding position in the thermal image to be corrected is determined as the noise interference pixel;

the constraints for the neighboring difference of the noise interference pixel relative to the neighboring pixel of the noise interference pixel being different in the target screening conditions corresponding to the different motion states, includes: a preset difference value threshold corresponding to the high-speed motion state is greater than a preset difference value threshold corresponding to the low-speed motion state, and/or the preset difference value threshold corresponding to the low-speed motion state is greater than a preset difference value threshold corresponding to the static state;

the target screening condition corresponding to the high-speed motion state further includes that: if the grayscale of the pixel in the thermal image to be corrected and the grayscale of the pixel at the corresponding position in the reference frame thermal image indicate the same target, and the difference value between the neighboring difference of the pixel in the thermal image to be corrected and the neighboring difference of the pixel at the corresponding position in the reference frame thermal image is less than a preset difference value threshold, the pixel at the corresponding position in the thermal image to be corrected is determined as the noise interference pixel;

in the target screening condition corresponding to the high-speed motion state, the preset difference value threshold corresponding to a case where the grayscale of the pixel in the thermal image to be corrected and the grayscale of the pixel at the corresponding position in the reference frame thermal image indicate the different targets is greater than the preset difference value threshold corresponding to a case where the grayscale of the pixel in the thermal image to be corrected and the grayscale of the pixel at the corresponding position in the reference frame thermal image indicate the same target;

the target screening condition further includes that: the sum of the neighboring difference of the pixel in the thermal image to be corrected and the neighboring difference of the pixel at the corresponding position in the reference frame thermal image is less than a preset sum threshold;

the constraints for the neighboring difference of the noise interference pixel relative to the neighboring pixel of the noise interference pixel being different in the target screening conditions corresponding to the different motion states, includes: a preset sum threshold corresponding to the high-speed motion state is greater than a preset sum threshold corresponding to the low-speed motion state, and/or the preset sum threshold corresponding to the low-speed motion state is greater than a preset sum threshold corresponding to the static state;

the target screening condition corresponding to the high-speed motion state further includes:

in the target screening condition corresponding to the high-speed motion state, the preset sum threshold corresponding to a case where a grayscale of a pixel in the thermal image to be corrected and a grayscale of a pixel at the corresponding position in the reference frame thermal image indicate different targets is greater than the preset sum threshold corresponding to a case where a grayscale of a pixel in the thermal image to be corrected and a grayscale of a pixel at a corresponding position in the reference frame thermal image indicate a same target;

the image correcting module includes:

a difference determining sub-module, configured to, for each pixel in the thermal image to be corrected with a noise interference pixel existed in the neighborhood of the pixel, determine a neighboring difference between the pixel and the noise interference pixel existed in the neighborhood of the pixel;

a pixel determining sub-module, configured to, if the neighboring difference meets a preset difference condition, determine the noise interference pixel as a pixel to be corrected; wherein the preset difference condition indicates that the pixel and the noise interference pixel existed in the neighborhood of the pixel correspond to the same target, and preset difference conditions corresponding to the different motion states are different;

a correction parameter determining sub-module, configured to determine a correction parameter corresponding to the pixel to be corrected based on the neighboring difference;

an image correcting sub-module, configured to perform correction on the pixel to be corrected based on the correction parameter to obtain a corrected thermal image;

the preset difference condition includes that the neighboring difference is not greater than a preset difference threshold, and the preset difference conditions corresponding to the different motion states being different include that: a preset difference threshold corresponding to the high-speed motion state is greater than a preset difference threshold corresponding to the low-speed motion state, and/or the preset difference threshold corresponding to the low-speed motion state is greater than a preset difference threshold corresponding to the static state;

the correction parameter determining sub-module, specifically configured to determine a correction parameter corresponding to the pixel to be corrected based on the neighboring difference and a preset correction degree parameter corresponding to the motion state; wherein the preset correction degree parameters corresponding to different motion states are different;

the preset correction degree parameters corresponding to the different motion states being different, includes: a value of the preset correction degree parameter corresponding to the high-speed motion state is greater than a value of the preset correction degree parameter corresponding to the low-speed motion state, and/or the value of the preset correction degree parameter corresponding to the low-speed motion state is greater than a value of the preset correction degree parameter corresponding to the static state;

the motion state determining module, specifically configured to acquire multiple groups of angular velocities of the thermal imaging device corresponding to the thermal image to be corrected, wherein each group of angular velocities includes at least one of a swing angular velocity, a tilt angular velocity, and a flip angular velocity; calculate a range and a sum for each type of the angular velocity; determine whether the motion state of the thermal imaging device is a high-speed motion state, a low-speed motion state or a static state based on the range and the sum;

the motion state determining module, specifically configured to determine the motion state of the thermal imaging device as the high-speed motion state if the range is not less than a first preset range threshold and the sum is not less than a first preset sum threshold; determine the motion state of the thermal imaging device as the low-speed motion state if the range is less than the first preset range threshold and the sum is less than the first preset sum threshold, and when the range is greater than a second preset range threshold and the sum is greater than a second preset sum threshold; wherein the first preset range threshold is greater than the second preset range threshold, and the first preset sum threshold is greater than the second preset sum threshold; determine the motion state of the thermal imaging device as the static state if the range is not greater than the second preset range threshold and the sum is not greater than the second preset sum threshold;

the thermal image to be corrected is a target thermal image to be processed, or the thermal image to be corrected is a preliminarily corrected thermal image obtained by performing preliminary correction on the target thermal image;

the apparatus further includes:
a preliminarily correcting module, configured to acquire an accumulating correction parameter obtained by accumulating a correction parameter corresponding to each of previous thermal images of the target thermal image; perform the preliminary correction on the target thermal image preliminarily based on the accumulating correction parameter to obtain the preliminarily corrected thermal image.

In a third aspect, an embodiment of the present application provides an electronic device, which includes a processor, a communication interface, a memory, and a communication bus, wherein the processor, the communication interface, and the memory communicate with each other through the communication bus;

the memory is configured to store a computer programs;

the processor is configured to implement the method steps according to the first aspect when executing the program stored in the memory.

In a fourth aspect, an embodiment of the present application provides a computer-readable storage medium, which stores a computer program, which when executed by a processor, implements any of the method steps described in the first aspect.
In a fifth aspect, an embodiment of the present application provides a computer program product containing instructions, which when executed by a computer, implements any of the method steps described in the first aspect.
Beneficial effects of the embodiments of the present application are as follows:
By adopting the method provided by the embodiment of the present application, a motion state of a thermal imaging device corresponding to a thermal image to be corrected is determined; a noise interference pixel is determined from the thermal image to be corrected by using a target screening condition corresponding to the motion state; and the thermal image to be corrected is performed correction based on the noise interference pixel. Target screening conditions corresponding to different motion states are different. That is, the noise interference pixels corresponding to different motion states can be determined for different motion states of the thermal imaging device, and then the thermal image to be corrected can be corrected by using the noise interference pixels corresponding to the motion state, thereby achieving an effect of accurately correcting the thermal image to be corrected in different motion states, and improving the accuracy of image correction. Of course, it is not necessary for any product or method implementing the present application to achieve all the advantages described above simultaneously.

## BRIEF DESCRIPTION OF THE DRAWINGS

The accompanying drawings described here are used to provide a further understanding of the present application and constitute a part of the same. The illustrative examples of the present application and their descriptions are used to explain the present application and do not constitute an improper limitation of the present application.

Figure 1 is a flow chart of a method for correcting a thermal imaging image provided by an embodiment of the present application;
Figure 2 is a flow chart of correcting a thermal image to be corrected provided by an embodiment of the present application;
Figure 3 is a schematic diagram of pixels in a thermal image to be corrected;
Figure 4 is a schematic diagram of correcting a thermal imaging image;
Figure 5(a) is an outdoor thermal image to be corrected;
Figure 5(b) is a corrected thermal image obtained by correcting the outdoor thermal image to be corrected shown in Figure 5(a) using the method for correcting the thermal imaging image provided by the present application;
Figure 6(a) is another outdoor thermal image to be corrected;
Figure 6(b) is a corrected thermal image obtained by correcting the outdoor thermal image to be corrected shown in Figure 6(a) using the method for correcting the thermal imaging image provided by the present application;

Figure 7 is a structural diagram of an apparatus for correcting a thermal imaging image provided by an embodiment of the present application;

Figure 8 is a structural diagram of an electronic device provided by an embodiment of the present application.

## DETAILED DESCRIPTION

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art without any creative efforts fall into the scope of protection of the present application.

When infrared imaging is performed, a thermal imaging device such as an infrared thermal imaging core and a thermal imager may exist phenomenon that inconsistent responses of various pixels due to non-uniform response, non-uniform lens transmittance, or device body radiation. This phenomenon will cause a fixed pattern noise in an output infrared image. For a thermal imaging core without a baffle structure, a fixed pattern noise of an output infrared image is also particularly serious. Wherein, the fixed image noise of the image is generally manifested as a pit or a vertical line floating on a surface of the image. Therefore, it is very necessary to correct the fixed pattern noise of the image.

In order to improve the accuracy of image correction, embodiments of the present application provide a method and apparatus for correcting a thermal imaging image, an electronic device, a computer-readable storage medium and a computer program product.

The following first introduces the method for correcting a thermal imaging image provided by an embodiment of the present application. The method for correcting a thermal imaging image provided by the embodiment of the present application can be applied to any electronic device with an image processing function, which is not specifically limited here.

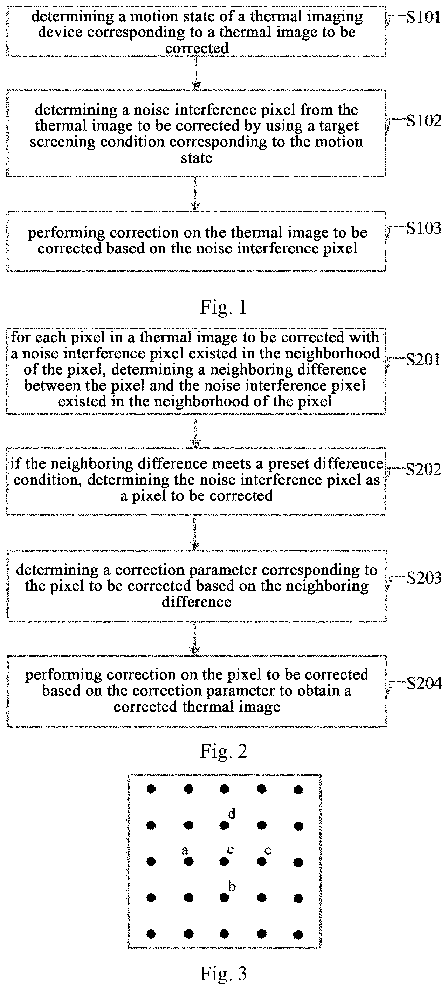

Figure 1 is a flow chart of a method for correcting a thermal imaging image provided by an embodiment of the present application. As shown in Figure 1, the method includes:

S101, determining a motion state of a thermal imaging device corresponding to a thermal image to be corrected.

S102, determining a noise interference pixel from the thermal image to be corrected by using a target screening condition corresponding to the motion state.

Wherein, different motion states correspond to different target screening conditions.

S103, performing correction on the thermal image to be corrected based on the noise interference pixel.

It can be seen that by using the method provided by the embodiment of the present application, the motion state of the thermal imaging device corresponding to the thermal image to be corrected is determined; the noise interference pixel from the thermal image to be corrected by using the target screening condition corresponding to the motion state is determined; and the thermal image to be corrected based on the noise interference pixel is performed correction. Different motion states correspond to different target screening conditions. That is, the noise interference pixels corresponding to the different motion states of the thermal imaging device can be determined, and then the thermal image to be corrected can be corrected by using the noise interference pixels corresponding to the motion state, thereby achieving the effect of accurately correcting the thermal image to be corrected in different motion states, and improving the accuracy of image correction.

In the embodiment of the present application, the thermal image to be corrected may be a target thermal image that needs to be processed, or the thermal image to be corrected may be a preliminarily corrected thermal image obtained by preliminarily correcting the target thermal image.

Wherein the target thermal image may be an unprocessed original thermal image collected by the thermal imaging device, or the target thermal image may be an image obtained by performing preliminary image processing on the original thermal image collected by the thermal imaging device. The preliminary image processing may include image enhancement processing, image restoration processing, image segmentation processing, etc., which is not specifically limited here.

In a possible implementation, since a change in angular velocity of the thermal imaging device can reflect a movement of the thermal imaging device, the change in angular velocity of the thermal imaging device can be acquired, and then the change in angular velocity can be used to determine the motion state of the thermal imaging device corresponding to the thermal image to be corrected. The motion state generally includes a high-speed motion state, a medium-speed motion state, a low-speed motion state, and a static state, etc.

Specifically, the above step of determining the motion state of the thermal imaging device corresponding to the thermal image to be corrected may include steps A1 to A3:

Step A1: acquiring multiple groups of angular velocities of the thermal imaging device corresponding to the thermal image to be corrected. Wherein, the thermal imaging device corresponding to the thermal image to be corrected is a thermal imaging device that collects the original thermal image corresponding to the thermal image to be corrected. Each group of the angular velocities may include at least one of a swing angular velocity, a tilt angular velocity, and a flip angular velocity.

In this implementation, an angular velocity detection apparatus, such as a gyroscope, can be used to detect multiple angular velocities of the thermal imaging device, such as three types of angular velocities: the swing angular velocity, the tilt angular velocity, and the flip angular velocity. Wherein, the swing angular velocity reflects an angular velocity of the thermal imaging device in a "left-right swing" motion direction, the tilt angular velocity reflects an angular velocity of the thermal imaging device in a "left-right tilt" motion direction, and the flip angular velocity reflects an angular velocity of the thermal imaging device in a "front-back flip" motion direction.

Specifically, in this implementation, the multiple groups of angular velocities of the thermal imaging device detected by the gyroscope can be acquired during a time period from a time corresponding to collecting a previous thermal image of the original thermal image corresponding to the thermal image to be corrected to a time corresponding to collecting the original thermal image. For example, the time when the thermal imaging device collects the previous thermal image of the original thermal image is t1, the time when the thermal imaging device collects the original thermal image is t2, and the gyroscope detects the three groups of the angular velocities of the thermal imaging device during a time period [t1, t2]. Then at this step, the multiple groups of the angular velocities of the thermal imaging device during the time period [t1, t2] can be obtained. For example, the three groups of the angular velocities acquired are: $(\alpha1, \beta1, \gamma1)$, $(\alpha2, \beta2, \gamma2)$ and $(\alpha3, \beta3, \gamma3)$, wherein $\alpha1$-$\alpha3$ are the swing angular velocities, $\beta1$-$\beta3$ are the tilt angular velocities, and $\gamma1$-$\gamma3$ are the flip angular velocities.

Step A2: calculating a range and a sum of each type of the angular velocities.

In the step, for every two groups of the angular velocities, a difference value between the same type of the angular velocities in the two groups can be calculated, and then a maximum difference value for each type can be determined as the range of the angular velocities of that type. For example, for the swing angular velocity, the difference values can be calculated as: $(\alpha1-\alpha2)$, $(\alpha1-\alpha3)$ and $(\alpha2-\alpha3)$, and the maximum difference value is determined as a range corresponding to the swing angular velocity; for the tilt angular velocity, the difference values can be calculated as: $(\beta1-\beta2)$, $(\beta1-\beta3)$ and $(\beta2-\beta3)$, and the maximum difference value is determined as a range corresponding to the tilt angular velocity; for the flip angular velocity, the difference values can be calculated as: $(\gamma1-\gamma2)$, $(\gamma1-\gamma3)$ and $(\gamma2-\gamma3)$, and the maximum difference value is determined as a range corresponding to the flip angular velocity.

For each type of angular velocity, the multiple angular velocities of the type can be added together to obtain the sum of the multiple angular velocities of the type. For example, the sum of the swing angular velocities can be calculated as: $(\alpha1+\alpha2+\alpha3)$, the sum of the tilt angular velocities can be calculated as: $(\beta1+\beta2+\beta3)$, and the sum of the flip angular velocities can be calculated as: $(\gamma1+\gamma2+\gamma3)$.

Step A3: determining whether the motion state of the thermal imaging device is the high-speed motion state, the low-speed motion state or the static state based on the range and the sum.

The range can reflect a maximum change of the angular velocity within a period from collecting the previous thermal image of the original thermal image to collecting the original thermal image, and the sum can reflect a distance that the thermal imaging device core travels within the period of collecting two frames of images.

Specifically, if the range is not less than a first preset range threshold and the sum is not less than a first preset sum threshold, the motion state of the thermal imaging device is determined to be the high-speed motion state;

if the range is less than the first preset range threshold and the sum is less than the first preset sum threshold, and when the range is greater than a second preset range threshold and the sum is greater than a second preset sum threshold, the motion state of the thermal imaging device is determined to be the low-speed motion state;
when the range is not greater than the second preset range threshold and the sum is not greater than the second preset sum threshold, the motion state of the thermal imaging device is determined to be the static state.

Wherein, the first preset range threshold, the second preset range threshold, the first preset sum threshold and the second preset sum threshold can all be set according to actual application conditions, which are not specifically limited here, and the first preset range threshold is greater than the second preset range threshold, and the first preset sum threshold is greater than the second preset sum threshold.

In the embodiment of the present application, it is possible to first determine whether the motion state of the thermal imaging device is the high-speed motion state based on the first preset range threshold and the first preset sum threshold. If the motion state of the thermal imaging device is not the high-speed motion state, it is then possible to continue to determine whether the motion state of the thermal imaging device is the low-speed motion state, and whether it is the static state, based on the second preset range threshold and the second preset sum threshold.

It can be seen that in this implementation, the motion state of the thermal imaging device can be classified into three types: the high-speed motion state, the low-speed motion state and the static state, based on the multiple groups of angular velocity data output by the gyroscope. It can not only determine whether the thermal imaging device is in a motion or non-motion state, but also determine the speed level of the thermal imaging device, so as to achieve high-precision determination of the motion state of the thermal imaging device. In this implementation, for the case that a high-speed motion state determination condition is not met but the actual motion speed has reached a high speed, that is, there is data missed to be detected for the high-speed motion state, it is highly likely to meet the subsequent low-speed motion state determination condition. The thermal image to be corrected in this case can also be corrected to some extent according to the low-speed motion state to achieve a correction effect to some extent. Similarly, for the case that a low-speed motion state determination condition is not met but the actual speed is low, that is, there is data missed to be detected for the low-speed motion state, the noise interference pixel screened out by the target screening condition corresponding to the static state can be used to correct the thermal image to be corrected to achieve a correction effect to some extent, thereby ensuring the accuracy of the correction.

After determining the motion state of the thermal imaging device, in the above step S102, the target screening condition corresponding to the motion state can be used to determine the noise interference pixel from the thermal image to be corrected. Wherein, the target screening conditions corresponding to different motion states are different. Since the difficulty degrees of screening the fixed image noise interference pixel in the corresponding thermal images to be corrected are different when the motion states of the thermal imaging device are different, for the thermal images to be corrected corresponding to different motion states, it is necessary to screen out the noise interference pixel in the thermal image to be corrected in combination with the motion state. Therefore, the target screening condition corresponding to the motion state can be used to determine an accurate noise interference pixel from the thermal image to be corrected. Then, the above step S103 can be executed, that is, the thermal image to be corrected is corrected based on the noise interference pixel.

In a possible implementation, the difference in grayscale between the noise interference pixel and its neighboring pixel has a certain regularity, for example, for the fixed pattern noise interference pixel, whether a scene changes due to the movement of the thermal imaging device's core, or the movement of the target in the scene when the core is static, the position of the fixed pattern noise interference pixel is always fixed, and the difference in grayscale between the pixel where the fixed pattern noise interference pixel is located and the neighboring pixel changes a little. Therefore, the noise interference pixel can be selected according to the change of the grayscale of individual pixels in the continuous frames of the thermal image to be corrected, and the change in a neighboring difference between the noise interference pixel and its neighboring pixel. Therefore, in order to accurately screen out a noise interference pixel, the neighboring difference of each pixel in the thermal image to be corrected relative to its neighboring pixel can be determined, and the noise interference pixel can be determined from the thermal image to be corrected by using the neighboring difference and the target screening condition.

In addition, the scene changes greatly when the thermal imaging device is in a high-speed motion state, and the selection of the noise interference pixel is relatively easy and reliable. The scene changes a little when the thermal imaging device is in low-speed motion state, and the reliability of the selection of the noise interference pixel is reduced. The scene changes slightly when the thermal imaging device is static, and the selection of the noise interference pixel is difficult and the reliability is low. That is, the scene changes differently under different motion states. Based on this, the noise interference pixels in the thermal images to be corrected corresponding to different motion states are also different. Therefore, the constraints for the neighboring difference of the noise interference pixel relative to its neighboring pixel in the target screening conditions corresponding to different motion states are also different.

In this implementation, the grayscale difference of each pixel in the thermal image to be corrected relative to its neighboring pixel can be determined as the neighboring difference of each pixel in the thermal image to be corrected relative to its neighboring pixel. Alternatively, in this implementation, the method described in the following steps B1-B2 can also be used to determine the neighboring difference of each pixel in the thermal image to be corrected relative to its neighboring pixel:

Step B1: presetting an all-zero neighboring difference matrix; traversing pixels of the thermal image to be corrected, calculating a sum of the difference value of pixel values between the currently traversed pixel and its neighborhood pixel, and the difference value of element values between an element in the neighboring difference matrix corresponding to the currently traversed pixel and its neighborhood element, as a pixel difference between the currently traversed pixel and its neighborhood pixel.

The neighboring pixel of a pixel may be a neighborhood pixel of the pixel. For example, the neighboring pixels of a pixel may be its 4 neighborhood pixels or 8 neighborhood pixels, etc. Alternatively, the neighboring pixel of a pixel may also be a pixel with a distance from the pixel within a preset pixel distance range, wherein the preset pixel distance may be set to a spacing between two neighboring pixels or twice the spacing between two neighboring pixels, etc., which is not specifically limited here.

The neighborhood pixel of the currently traversed pixel may be: each of the 4 neighborhood pixels of the currently traversed pixel, that is, the left, right, top, and bottom closest pixels of the currently traversed pixel. The neighborhood elements may be: each of 4 neighborhood elements of the element in the neighboring difference matrix corresponding to the currently traversed pixel, that is, the left, right, top, and bottom closest elements of the element in the neighboring difference matrix corresponding to the currently traversed pixel.

Specifically, in this implementation, the following formula can be used to calculate the sum of the difference value of pixel values between the currently traversed pixel and its neighborhood pixel, and difference value of the element values between the element in the neighboring difference matrix corresponding to the currently traversed pixel and its neighborhood element, as the pixel difference between the currently traversed pixel and its neighborhood pixel:

$$\mathrm{dif} = Y(i, j) - Y_{\mathrm{neighbor}} + \mathrm{Correct\_noise}(i, j) - \mathrm{Correct\_noise}_{\mathrm{neighbor}}$$

wherein, dif is the pixel difference, Y (i, j) is the pixel value of the currently traversed pixel (i, j) in the thermal image to be corrected, Correct noise is the neighboring difference matrix, $Y_{\mathrm{neighbor}}$ is the pixel value of the neighborhood pixel of the currently traversed pixel (i, j), Correct noise (i, j) is the element value in the neighboring difference matrix corresponding to the currently traversed pixel, and $\mathrm{Correct\_noise}_{\mathrm{neighbor}}$ is the value of the neighborhood element of the element in the neighboring difference matrix corresponding to the currently traversed pixel.

Step B2:, updating the value of the element in the neighboring difference matrix corresponding to the neighborhood pixel based on the pixel difference, to obtain an updated neighboring difference matrix, until all of the pixels of the thermal image to be corrected are traversed to obtain a target neighboring difference matrix, then determining the neighboring difference of each pixel in the thermal image to be corrected relative to its neighboring pixel the value of the corresponding element in the target neighboring difference matrix.

In this implementation, the following formula may be specifically used to update the value of the element in the neighboring difference matrix corresponding to the neighborhood pixel based on the pixel difference:

$$\mathrm{Correct\_noise}_{\mathrm{neighbor}} = \mathrm{Correct\_noise}_{\mathrm{neighbor}} + 0.5 * \mathrm{dif}$$

when all of the pixels of the thermal image to be corrected are traversed, the target neighboring difference matrix Correct noise after the updating is completed can be obtained, and then the neighboring difference of each pixel in the thermal image to be corrected relative to its neighboring pixel can be determined as the value of the corresponding element in the target neighboring difference matrix.

In the embodiment of the present application, the target screening condition corresponding to the motion state can be used to screen out the noise interference pixel from the thermal image to be corrected.

In a possible implementation, whether a scene changes due to the movement of the thermal imaging device's core, or the movement of the target in the scene when the core is static, the position of the fixed pattern noise is always fixed, and the grayscale difference between the pixel where the fixed pattern noise is located and its surrounding pixel changes a little. Therefore, on the basis of change between the grayscale of the pixel in the thermal image to be corrected and the grayscale of the pixel at the corresponding position of the reference frame thermal image, this pixel of the thermal image to be corrected should be transferred from one target to another target, and the grayscale of the pixel in the thermal image to be corrected and the grayscale of the pixel at the corresponding position of the reference frame thermal image change due to two different target temperatures, then this pixel of the thermal image to be corrected is determined as a noise interference pixel. Therefore, the target screening condition may include: the grayscale of the pixel in the thermal image to be corrected and the grayscale of the pixel at the corresponding position of the reference frame thermal image indicate different targets, and the difference value between the neighboring difference of the pixel in the thermal image to be corrected and the neighboring difference of the pixel at the corresponding position of the reference frame thermal image is less than a preset difference value threshold, then the pixel at the corresponding position in the thermal image to be corrected is determined as the noise interference pixel. Wherein, the reference frame thermal image can usually be a previous frame thermal image of the thermal image to be corrected.

Since the grayscale difference between two pixels located in the same target in the thermal image to be corrected is always within a normal grayscale difference scale, if the grayscale difference between the grayscale of the pixel in the thermal image to be corrected and the grayscale of the pixel at the corresponding position of the reference frame thermal image is greater than the preset grayscale difference threshold, it means that the grayscale difference between the pixel at the corresponding position in the thermal image to be corrected and the pixel at the corresponding position in the reference frame thermal image exceeds the normal grayscale difference scale, that is, it can be determined that the pixel at the corresponding position in the thermal image to be corrected and the pixel at the corresponding position in the reference frame thermal image are located at different targets. The grayscale difference scale is the preset grayscale difference threshold, therefore, when the grayscale difference between the grayscale of the pixel in the thermal image to be corrected and the grayscale of the pixel at the corresponding position in the reference frame thermal image is greater than the preset grayscale difference threshold corresponding to the motion state, it can be determined that the grayscale of the pixel in the thermal image to be corrected and the grayscale of the pixel at the corresponding position in the reference frame thermal image indicate different targets.

In the embodiment of the present application, the position of the fixed pattern noise interference pixel of individual frame of the thermal image to be corrected corresponding to the thermal imaging device is always fixed, and the difference in grayscale between the pixel where the fixed pattern noise interference pixel is located and the neighboring pixel changes a little, that is, the difference value of the neighboring differences between the pixels at the corresponding positions in the two frames of images is also within a certain difference value scale. The difference value scale is the preset difference value threshold, therefore, when the difference value between the neighboring difference of the pixel in the thermal image to be corrected and the neighboring difference of the pixel at the corresponding position in the reference frame thermal image is less than the preset difference value threshold, and the grayscale of the pixel in the thermal image to be corrected and the grayscale of the pixel at the corresponding position in the reference frame thermal image indicate different targets, the pixel in the thermal image to be corrected can be determined as a noise interference pixel.

In the embodiment of the present application, since the scene changes greatly when the thermal imaging device is in a high-speed motion state, the selection of noise interference pixel is relatively easy and reliable, and the pixels in the thermal image to be corrected and at the corresponding position in the reference frame thermal image can easily correspond to different targets, the preset grayscale difference threshold corresponding to the high-speed motion state can be set to be smaller, so that more noise interference pixels can be determined and the accuracy of image correction can be improved. The scene changes a little when the thermal imaging device is in a low-speed motion state, and the reliability of the selection of noise interference pixel is reduced. Therefore, the preset grayscale difference threshold corresponding to the low-speed motion state can be set to be larger, so that the select band for selecting noise interference pixel is increased, the selection accuracy of the select band for noise interference pixel is ensured, and the problem of mistaken selection of noise interference pixel is avoided, thereby ensuring the accuracy of image correction. The scene changes slightly when the thermal imaging device is in a static state, and the selection of the noise interference pixel is difficult and the reliability is low. Therefore, the preset grayscale difference threshold corresponding to the static state can be set to be further larger, so that the select band for selecting the noise interference pixel is further increased, the selection accuracy of the select band for the noise interference pixel is ensured, the problem of mistaken selection of the noise interference pixel is avoided, and the accuracy of image correction is ensured.

Therefore, the preset grayscale difference thresholds corresponding to different motion states are different. In addition, since the scene changes greatly when the thermal imaging device is in a high-speed motion state, the selection of the noise interference pixel is relatively easy and reliable, the scene changes slightly when the thermal imaging device is in a low-speed motion state, the reliability of the selection of the noise interference pixel is reduced, and the scene changes slightly when the thermal imaging device is in a static state, the selection of the noise interference pixel is difficult and the reliability is low. The preset grayscale difference thresholds corresponding to different motion states being different may include that: the preset grayscale difference threshold corresponding to the static state is greater than the preset grayscale difference threshold corresponding to the low-speed motion state, and/or the preset grayscale difference threshold corresponding to the low-speed motion state is greater than the preset grayscale difference threshold corresponding to the high-speed motion state. The specific values of the preset grayscale difference thresholds corresponding to different motion states can be set according to experience values of actual applications, which are not specifically limited here.

In the embodiment of the present application, since the scene changes greatly when the thermal imaging device is in a high-speed motion state, the difference value between the neighboring differences of the pixels at respective positions in the thermal image to be corrected and the reference frame thermal image is usually large, the preset difference value threshold corresponding to the high-speed motion state can be set larger, so that more noise interference pixels can be determined, and the accuracy of image correction can be improved. The scene changes a little when the thermal imaging device is in a low-speed motion state, and the difference value between the neighboring differences of the pixels at respective positions in the thermal image to be corrected and the reference frame thermal image is usually small, the preset difference value threshold corresponding to the low-speed motion state can be set to be smaller, so that the select band for selecting noise interference pixel is increased, the problem of mistaken selection of noise interference pixel is avoided, and the accuracy of image correction in ensured. The scene changes slightly when the thermal imaging device is in a static state, the difference value between the neighboring differences of the pixels at respective positions in the thermal image to be corrected and the reference frame thermal image is usually small. Therefore, the preset difference value threshold corresponding to the static state can be set to be further smaller, the select band for selecting the noise interference pixel is further increased, the problem of mistaken selection of the noise interference pixel is avoided, and the accuracy of image correction is ensured.

Therefore, the preset difference value thresholds corresponding to different motion states are different, and the constraints for the neighboring difference of the noise interference pixel relative to its neighboring pixel in the target screening conditions corresponding to the different motion states being different may include that: the preset difference value threshold corresponding to the high-speed motion state is greater than the preset difference value threshold corresponding to the low-speed motion state, and/or, the preset difference value threshold corresponding to the low-speed motion state is greater than the preset difference value threshold corresponding to the static state. The specific values of the preset difference value thresholds corresponding to different motion states can be set according to the experience values of actual applications, which are not specifically limited here.

In a possible implementation, since the scene changes greatly when the thermal imaging device is in a high-speed motion state, when in a high-speed motion state, the grayscale difference between the pixel grayscale of the pixel in the thermal image to be corrected and the grayscale of the pixel at the corresponding position in the reference frame thermal image is within the preset grayscale difference threshold scale corresponding to the high-speed motion state, it is possible that the pixel is still moving on one large and uniform target, or it is also possible that radiation amount of the target collected by the thermal image to be corrected and the reference frame thermal image are similar. Therefore, the target screening condition corresponding to the high-speed motion state may also include that: the grayscale of the pixel in the thermal image to be corrected and the grayscale of the pixel at the corresponding position in the reference frame thermal image indicate the same target, and the difference value between the neighboring difference of the pixel in the thermal image to be corrected and the neighboring difference of the pixel at the corresponding position in the reference frame thermal image is less than the preset difference value threshold, then the pixel at the corresponding position in the thermal image to be corrected is determined as a noise interference pixel.

For example, the target in the thermal image to be corrected is a gray background with a large area. When the pixel moves at high speed on the gray background, the grayscale difference between the grayscale pixel of the pixel in the thermal image to be corrected and the grayscale of the pixel at the corresponding position in the reference frame thermal image is also within the preset grayscale difference threshold scale corresponding to the high-speed motion state. Then, when the difference value between the neighboring difference of the pixel in the thermal image to be corrected and the neighboring difference of the pixel at the corresponding position in the reference frame thermal image is less than the preset difference value threshold, the pixel at the corresponding position in the thermal image to be corrected can be determined as a noise interference pixel.

In the embodiment of the present application, when two pixels correspond to the same target, the grayscale of the two pixels are relatively similar, and the neighboring differences between the two pixels and their respective neighboring pixels are also relatively similar. Therefore, when the grayscale of the pixel in the thermal image to be corrected and the grayscale of the pixel at the corresponding position in the reference frame thermal image indicate the same target, the difference value between the neighboring difference of the corresponding position in the thermal image to be corrected and the neighboring difference of the pixel at the corresponding position in the reference frame thermal image is also relatively small. When the two pixels correspond to different targets, the grayscale of the two pixels are greatly different, and the neighboring differences between the two pixels and their respective neighboring pixels are also greatly different. Therefore, when the grayscale of the pixel in the thermal image to be corrected and the grayscale of the pixel at the corresponding position in the reference frame thermal image indicate different targets, the difference value between the neighboring difference of the corresponding position in the thermal image to be corrected and the neighboring difference of the pixel at the corresponding position in the reference frame thermal image is large. Therefore, in the target screening condition corresponding to the high-speed motion state, the preset difference value threshold corresponding to the case that the grayscale of the pixel in the thermal image to be corrected and the grayscale of the pixel at the corresponding position in the reference frame thermal image indicate different targets is greater than the preset difference value threshold corresponding to the case that the grayscales indicate the same target.

In a possible implementation, since the neighboring differences of pixels in the thermal image is within a certain scale, the sum of the neighboring differences of the pixels at the respective positions in two frames of the thermal images is also within the noise intensity scale. The noise intensity scale is a preset sum threshold, so the target screening condition may also include that: the sum of the neighboring difference of the pixel in the thermal image to be corrected and the neighboring difference of the pixel at the corresponding position in the reference frame thermal image is less than the preset sum threshold.

In the embodiment of the present application, since the scene changes greatly when the thermal imaging device is in a high-speed motion state, the difference value between neighboring differences of the pixels at the respective positions in the thermal image to be corrected and the reference frame thermal image are usually large, therefore, the sum of the neighboring difference of the pixel in the thermal image to be corrected and the neighboring difference of the pixel at the corresponding position in the reference frame thermal image is also large, and the preset sum threshold corresponding to the high-speed motion state can be set larger, so that more noise interference pixels can be determined, and the accuracy of image correction can be improved. The scene changes a little when the thermal imaging device is in a low-speed motion state, and the neighboring differences of the pixels at respective positions between the pixels at respective positions in the thermal image to be corrected and the reference frame thermal image are usually small, therefore, the sum of the neighboring difference of the pixel in the thermal image to be corrected and the neighboring difference of the pixel at the corresponding position in the reference frame thermal image is also small, and the preset sum threshold corresponding to the low-speed motion state can be set smaller, so that the select band for selecting the noise interference pixel is increased, the problem of mistaken selection of the noise interference pixel is avoided, and the accuracy of image correction is ensured. The scene changes slightly when the thermal imaging device is in a static state, and the neighboring difference of pixels at respective positions between the pixels at respective positions in the thermal image to be corrected and the reference frame thermal image is smaller. Therefore, the sum of the neighboring difference of the pixel in the thermal image to be corrected and the neighboring difference of the pixel at corresponding position in the reference frame thermal image is also smaller. The preset sum threshold corresponding to the static state can be set further smaller, the select band for selecting the noise interference pixel is further increased, the problem of mistaken selection of the noise interference pixel is avoided, and the accuracy of image correction is ensured.

Therefore, the preset sum thresholds corresponding to different motion states are different, and the constraints for the neighboring difference of the noise interference pixel relative to its neighboring pixel in the target screening conditions corresponding to the different motion states being different includes that: the preset sum threshold corresponding to the high-speed motion state is greater than the preset sum threshold corresponding to the low-speed motion state, and/or, the preset sum threshold corresponding to the low-speed motion state is greater than the preset sum threshold corresponding to the static state. The specific values of the preset sum thresholds corresponding to different motion states can be set according to the experience values of actual applications, which are not specifically limited here.

In a possible implementation, when two pixels correspond to the same target, the neighboring differences between the two pixels and their respective neighboring pixels are relatively small. Therefore, when the grayscale of the pixel in the thermal image to be corrected and the grayscale of the pixel at the corresponding position in the reference frame thermal image indicate the same target, the sum of the neighboring difference of the corresponding position in the thermal image to be corrected and the neighboring difference of the pixel at the corresponding position in the reference frame thermal image is also relatively small. When the two pixels correspond to different targets, the neighboring differences between the two pixels and their respective neighboring pixels are relatively large. Therefore, when the grayscale of the pixel in the thermal image to be corrected and the grayscale of the pixel at the corresponding position in the reference frame thermal image indicate different targets, the sum of the neighboring difference of the pixel at the corresponding position in the thermal image to be corrected and the neighboring difference of the pixel at the corresponding position in the reference frame thermal image is large. Therefore, the target screening condition corresponding to the high-speed motion state may also include that: in the target screening condition corresponding to the high-speed motion state, the preset sum threshold corresponding to the case that the grayscale of the pixel in the thermal image to be corrected and the grayscale of the pixel at the corresponding position in the reference frame thermal image indicate different targets is greater than the preset sum threshold corresponding to the case that the grayscales indicate the same target.

The following is an example of the target screening conditions corresponding to different motion states in combined with a specific screening condition formula:

when the motion state is the high-speed motion state, if the pixel (i, j) in the thermal image to be corrected meets the following Condition (1) or Condition (2), the pixel is determined to be the noise interference pixel.

Condition (1):

$$\begin{cases} \text{abs}(\text{Correct\_noise}(i,j) - \text{Correct\_noise}'(i,j)) < n_{11} \\ \text{abs}(\text{Correct\_noise}(i,j) + \text{Correct\_noise}'(i,j)) < n_{12} \\ \text{abs}(Y(i,j) - Y'(i,j)) > n_{13} \end{cases}$$

wherein abs() represents an operation of taking an absolute value, $Y(i, j)$ is a pixel value (i.e., grayscale of pixel) of this pixel (i, j) in the thermal image to be corrected, $Y'(i, j)$ is a pixel value of the pixel at the corresponding position in the reference frame thermal image, Correct noise (i, j) is the neighboring difference of this pixel, Correct_noise'(i, j) is the neighboring difference of the pixel at the corresponding position in the reference frame thermal image, $n_{11}$ is the preset difference value threshold corresponding to the high-speed motion state when the grayscale of the pixel in the thermal image to be corrected and the grayscale of the pixel at the corresponding position in the reference frame thermal image indicate different targets, $n_{12}$ is the preset sum threshold corresponding to the high-speed motion state when the grayscale of the pixel in the thermal image to be corrected and the grayscale of the pixel at the corresponding position in the reference frame thermal image indicate different targets, and $n_{13}$ is the preset grayscale difference threshold corresponding to the high-speed motion state.

When the grayscale difference between the pixel grayscale of the pixel in the thermal image to be corrected and the grayscale of the pixel at the corresponding position in the reference frame thermal image is greater than the preset grayscale difference threshold corresponding to the high-speed motion state, that is $\text{abs}(Y(i, j) - Y'(i, j)) > n_{13}$, it can be determined that this pixel in the thermal image to be corrected and the pixel at the corresponding position in the reference frame thermal image indicate different targets. At the same time, when an absolute value of the difference value between the neighboring difference of the pixel in the thermal image to be corrected and the neighboring difference of the pixel at the corresponding position in the reference frame thermal image is less than the preset difference value threshold $n_{11}$, and an absolute value of the sum of the neighboring difference of the pixel in the thermal image to be corrected and the neighboring difference of the pixel at the corresponding position in the reference frame thermal image is less than the preset sum

threshold $n_{12}$, the pixel in the thermal image to be corrected can be determined as a noise interference pixel.

Condition (2):

$$\begin{cases} abs(Correct\_noise(i,j) - Correct\_noise'(i,j)) < n_{21} \\ abs(Correct\_noise(i,j) + Correct\_noise'(i,j)) < n_{22} \\ abs(Y(i,j) - Y'(i,j)) \leq n_{23} \end{cases}$$

wherein, $n_{21}$ is the preset difference value threshold corresponding to the high-speed motion state when the grayscale of the pixel in the thermal image to be corrected and the grayscale of the pixel at the corresponding position in the reference frame thermal image indicate the same target, $n_{22}$ is the preset sum threshold corresponding to the high-speed motion state when the grayscale of the pixel in the thermal image to be corrected and the grayscale of the pixel at the corresponding position in the reference frame thermal image indicate the same target, $n_{23}$ is the preset grayscale difference threshold corresponding to the high-speed motion state, and $n_{11} > n_{21}$.

In the high-speed motion state, when the grayscale difference between the pixel grayscale of the pixel in the thermal image to be corrected and the grayscale of the pixel at the corresponding position in the reference frame thermal image is within the preset grayscale difference threshold scale corresponding to the high-speed motion state, that is $abs(Y(i,j) - Y'(i,j)) \leq n_{23}$, it can be determined that this pixel in the thermal image to be corrected and the pixel at the corresponding position in the reference frame thermal image indicate the same target, and at the same time, when an absolute value of the difference value between the neighboring difference of the pixel in the thermal image to be corrected and the neighboring difference of the pixel at the corresponding position in the reference frame thermal image is less than the preset difference value threshold $n_{21}$, and an absolute value of the sum of the neighboring difference of the pixel in the thermal image to be corrected and the neighboring difference of the pixel at the corresponding position in the reference frame thermal image is less than the preset sum threshold $n_{22}$, then the pixel in the thermal image to be corrected can be determined as a noise interference pixel.

When the motion state is a low-speed motion state, if the pixel $(i, j)$ in the thermal image to be corrected meets the following Condition (3), it can be determined that the pixel is a noise interference pixel.

Condition (3):

$$\begin{cases} abs(Correct\_noise(i,j) - Correct\_noise'(i,j)) < n_{31} \\ abs(Correct\_noise(i,j) + Correct\_noise'(i,j)) < n_{32} \\ abs(Y(i,j) - Y'(i,j)) > n_{33} \end{cases}$$

wherein, $n_{31}$ is the preset difference value threshold corresponding to the low-speed motion state, $n_{32}$ is the preset sum threshold corresponding to the low-speed motion state, $n_{33}$ is the preset grayscale difference threshold corresponding to the low-speed motion state, $n_{31} < n_{21}$, $n_{32} < n_{22}$, $n_{33} > n_{23}$, $n_{13} = n_{23}$.

The low-speed motion state does not allow a pixel with small grayscale difference change to be the noise interference pixel. When the grayscale difference between the pixel grayscale of the pixel in the thermal image to be corrected and the grayscale of the pixel at the corresponding position in the reference frame thermal image is greater than the preset grayscale difference threshold corresponding to the low-speed motion state, that is $abs(Y(i,j) - Y'(i,j)) > n_{33}$, it can be determined that the pixel in the thermal image to be corrected and the pixel at the corresponding position in the reference frame thermal image indicate different targets, and at the same time, when the absolute value of the difference value between the neighboring difference of the pixel in the thermal image to be corrected and the neighboring difference of the pixel at the corresponding position in the reference frame thermal image is less than the preset difference value threshold $n_{31}$, and the absolute value of the sum of the neighboring difference of the pixel in the thermal image to be corrected and the neighboring difference of the pixel at the corresponding position in the reference frame thermal image is less than the preset sum threshold $n_{32}$, the pixel in the thermal image to be corrected can be determined as the noise interference pixel.

When the motion state is a static state, if the pixel $(i, j)$ in the thermal image to be corrected meets the following Condition (4), it can be determined that the pixel is a noise interference pixel.

Condition (4):

$$\begin{cases} \mathrm{abs}(\mathrm{Correct\_noise}(i,j) - \mathrm{Correct\_noise}'(i,j)) < n_{41} \\ \mathrm{abs}(\mathrm{Correct\_noise}(i,j) + \mathrm{Correct\_noise}'(i,j)) < n_{42} \\ \mathrm{abs}(Y(i,j) - Y'(i,j)) > n_{43} \end{cases}$$

wherein, $n_{41}$ is the preset difference value threshold corresponding to the static state, $n_{42}$ is the preset sum threshold corresponding to the static state, $n_{43}$ is the preset grayscale difference threshold corresponding to the static state, $n_{41} < n_{31}$, $n_{42} < n_{32}$, $n_{43} > n_{33}$.

When the motion state is the static state, if the pixel meets the above Condition (4), it means that only a weak fixed pattern noise can be corrected in the static state, and the grayscale difference change here is caused by the target motion. When the grayscale difference between the pixel grayscale of the pixel in the thermal image to be corrected and the grayscale of the pixel at the corresponding position in the reference frame thermal image is greater than the preset grayscale difference threshold corresponding to the static state, that is $\mathrm{abs}(Y(i,j) - Y'(i,j)) > n_{43}$, it can be determined that this pixel in the thermal image to be corrected and the pixel at the corresponding position in the reference frame thermal image indicate different targets, and at the same time, when the absolute value of the difference value between the neighboring difference of the pixel in the thermal image to be corrected and the neighboring difference of the pixel at the corresponding position in the reference frame thermal image is less than the preset difference value threshold $n_{41}$, and the absolute value of the sum of the neighboring difference of the pixel in the thermal image to be corrected and the neighboring difference of the pixel at the corresponding position in the reference frame thermal image is less than the preset sum threshold $n_{42}$, the pixel in the thermal image to be corrected can be determined as the noise interference pixel.

It can be seen that in this implementation, the three motion states of the thermal imaging device correspond to different target screening conditions respectively. A corresponding noise interference pixel selection mode can be entered for the different motion states, and the three modes are basically the same, with only the corresponding target screening conditions being different. The screening framework is simple and easy to implement, and the amount of calculation is small. The target screening condition is combined with the motion state of the thermal imaging device, when screening the noise interference pixel, the characteristics of the position of the fixed pattern noise being fixed and the fixed pattern noise being additive noise are used, which can realize a rapid screening of the noise interference pixel, reduce the amount of calculation in the screening process, and reduce the screening error rate.

After determining the noise interference pixel in the thermal image to be corrected, in the above step S103, in order to exclude the noise interference pixel that is mistakenly selected, the neighboring difference between each pixel with a noise interference pixel existed in its neighborhood in the thermal image to be corrected and said noise interference pixel in its neighborhood can be used to further screen out the pixel to be corrected from the noise interference pixel, and then a correction parameter corresponding the pixel to be corrected can be determined, and then the correction parameter is used to correct the pixel to be corrected, and the corrected thermal image is obtained. Wherein, the correction parameter is a grayscale parameter that can be used to correct the grayscale of the pixel to be corrected.

In a possible implementation, since neighboring differences of individual pixels in the same target in the thermal image to be corrected are always within the preset difference threshold, when the neighboring difference between the pixel and the noise interference pixel in its neighborhood is greater than the preset difference threshold, it indicates that the pixel and the noise interference pixel in its neighborhood are not located on the same target. Therefore, the excessive difference value between the neighboring differences of the noise interference pixel and of the pixel in its neighborhood is not caused by the fixed image noise, but because the pixel and the noise interference pixel in its neighborhood are located on different targets respectively and the noise interference pixel is actually determined as a noise interference pixel by mistake, and there is no need to correct the noise interference pixel. When the neighboring difference between the pixel and the noise interference pixel in its neighborhood is not greater than the preset difference threshold, it indicates that the pixel and the noise interference pixel in its neighborhood correspond to the same target. Therefore, the excessive difference value between the neighboring differences of the noise interference pixel and of the pixel in its neighborhood is caused by the fixed image noise, so the noise interference pixel is determined as a pixel to be corrected, and the pixel to be corrected needs to be corrected later. Therefore, the neighboring difference between each pixel with a noise interference pixel existed in its neighborhood in the thermal image to be corrected and the noise interference pixel in its neighborhood can be used to further screen out the pixel to be corrected from the noise interference pixel, and then the correction parameter corresponding to the pixel to be corrected can be determined, and then the correction parameter is used to correct the pixel to be corrected to obtain the corrected thermal image. Specifically, Figure 2 is a flow chart of correcting a thermal image to be corrected provided by an embodiment of the present application. As shown in Figure 2, correcting the thermal image to be corrected based on the noise interference pixel may include:

S201, for each pixel with a noise interference pixel existed in its neighborhood in the thermal image to be corrected, determining a neighboring difference between the pixel and the noise interference pixel in its neighborhood.

Specifically, an all-zero correction parameter matrix can be predefined. For each pixel with the noise interference pixel existed in its neighborhood in the thermal image to be corrected, the sum of a pixel difference value between this pixel and the noise interference pixel in its neighborhood and an element difference value between an element at the corresponding position in the correction parameter matrix and the element in its neighborhood can be calculated, and the sum is used as the neighboring difference between the pixel and the noise interference pixel in its neighborhood.

S202, if the neighboring difference meets a preset difference condition, determining the noise interference pixel as a pixel to be corrected.

Wherein the preset difference condition indicates that the pixel and the noise interference pixel in its neighborhood correspond to the same target, and different motion states correspond to different preset difference conditions.

In the embodiment of the present application, since the neighboring differences of individual pixels in the same target in the thermal image to be corrected are always within a certain difference scale, if the neighboring difference between the pixel and the noise interference pixel in the neighborhood of said pixel is not within the difference scale, it means that the pixel and the noise interference pixel in the neighborhood of said pixel are not located on the same target, that is, the excessive difference value between the neighboring differences of the noise interference pixel and of the pixel in its neighborhood is not caused by the fixed image noise, but because the pixel and the noise interference pixel in the neighborhood of said pixel are located on different targets, and the noise interference pixel is actually determined as a noise interference pixel by mistake. The difference scale is the preset difference threshold, so the preset difference condition can include that the neighboring difference is not greater than the preset difference threshold.

Furthermore, since the scene changes greatly when the thermal imaging device is in the high-speed motion, the neighboring differences of individual pixels in the same target in the thermal image to be corrected are also large. Therefore, the preset difference threshold corresponding to the high-speed motion state can be set larger, so that more interference pixels to be corrected can be determined, that is, more pixels to be corrected can be corrected, thereby improving the accuracy of image correction. The scene changes a little when the thermal imaging device is in the low-speed motion, and the neighboring differences of individual pixels in the same target in the thermal image to be corrected are usually small. Therefore, the preset difference threshold corresponding to the low-speed motion state can be set smaller, thereby increasing the select band for screening pixels to be corrected and ensuring the accuracy of image correction. The scene changes slightly when the thermal imaging device is in a static state, and the neighboring differences of individual pixels in the same target in the thermal image to be corrected are usually further smaller. Therefore, the preset difference threshold corresponding to the static state can be set further smaller, thereby further increasing the select band for screening pixels to be corrected and ensuring the accuracy of image correction. Therefore, the preset difference condition may include that the neighboring difference is not greater than the preset difference threshold, and the preset difference conditions corresponding to different motion states include that: the preset difference threshold corresponding to the high-speed motion state is greater than the preset difference threshold corresponding to the low-speed motion state, and/or the preset difference threshold corresponding to the low-speed motion state is greater than the preset difference threshold corresponding to the static state. The specific values of the preset difference thresholds corresponding to different motion states can be set according to the experience values of actual applications, which are not specifically limited here.

Since the neighboring differences of individual pixels in the same target in the thermal image to be corrected are always within the preset difference threshold, when the neighboring difference between the pixel and the noise interference pixel in the neighborhood of said pixel is greater than the preset difference threshold, it means that the pixel and the noise interference pixel in the neighborhood of said pixel are not located on the same target. Therefore, the excessive difference value between the neighboring differences of the noise interference pixel and of the pixel in its neighborhood is not caused by the fixed image noise, but because the pixel and the noise interference pixel in the neighborhood of said pixel are located on different targets and the noise interference pixel is actually determined as a noise interference pixel by mistake, and there is no need to correct the noise interference pixel. When the neighboring difference between the pixel and the noise interference pixel in the neighborhood of the pixel is not greater than the preset difference threshold, it means that the pixel and the noise interference pixel in the neighborhood of the pixel correspond to the same target. Therefore, the excessive difference value between the neighboring differences of the noise interference pixel and of the pixel in its neighborhood is caused by the fixed image noise, so the noise interference pixel is determined as a pixel to be corrected, and the pixel to be corrected needs to be corrected later.

S203, determining a correction parameter corresponding to the pixel to be corrected based on the neighboring difference.

The correction parameter is a grayscale parameter that can be used to correct the grayscale of the pixel to be corrected.

Since the neighboring differences between individual pixels and their respective neighborhood in the same target in the thermal image to be corrected are within a certain scale, the neighboring difference between a normal pixel and its own neighborhood pixel is usually within the neighboring difference scale, while the neighboring difference between the pixel to be corrected and its neighborhood pixel is greater than the neighboring difference between the normal pixel and its own neighborhood pixel, and is outside the neighboring difference scale. Therefore, the neighboring difference between the pixel to be corrected and its neighborhood pixel can be used to determine the corresponding correction parameter for correcting the grayscale of the pixel to be corrected, so that the neighboring difference between the pixel to be corrected and its neighborhood pixel is within the normal neighboring difference scale.

The neighboring difference between the pixel and the noise interference pixel in its neighborhood reflects the grayscale difference between the noise interference pixel and the normal pixel. Therefore, for each pixel to be corrected, the sum of the product of the neighboring difference and a preset coefficient, and the element value at the corresponding position in the correction parameter matrix can be determined as the correction parameter corresponding to the pixel to be corrected. Wherein the preset coefficient can be specifically set according to the actual application scenario, for example, it can be set to 0.5 or 0.6.

If there are multiple neighborhood pixels in all of the neighborhood pixels of the pixel to be corrected meets that the neighboring differences between the respective neighborhood pixel and the pixel to be corrected meets the preset difference condition, the correction parameter corresponding to the pixel to be corrected can be updated in sequence according to the order of calculating the neighboring differences between the pixel and the noise interference pixels in the neighborhoods of this pixel, until the neighboring differences of all of the neighborhood pixels between individual neighborhood pixel and the pixel to be corrected that meet the preset difference condition participate in the calculation or update of the correction parameter corresponding to the pixel to be corrected.

For example, Figure 3 is a schematic diagram of individual pixels in the thermal image to be corrected. As shown in Figure 3, Pixel e is a noise interference pixel, and Pixels a, b, c, and d are neighborhood pixels of the noise interference Pixel e.

When the neighboring difference between Pixel a and the noise interference Pixel e, the neighboring difference between Pixel b and the noise interference Pixel e, the neighboring difference between Pixel c and the noise interference Pixel e, or the neighboring difference between Pixel d and the noise interference Pixel e meets the preset difference condition, the noise interference Pixel e can be selected as the pixel to be corrected.

If in Figure 3, the neighboring difference between Pixel a and the noise interference Pixel e, the neighboring difference between Pixel b and the noise interference Pixel e, the neighboring difference between Pixel c and the noise interference Pixel e, and the neighboring difference between Pixel d and the noise interference Pixel e all meets the preset difference condition, that is, the noise interference Pixel e is the pixel to be corrected, and at the same time, the neighboring difference between each pixel and the noise interference Pixel e in the neighborhood of the pixel is calculated in sequence of Pixel a, Pixel b, Pixel c, and Pixel d, then after the neighboring difference between Pixel a and Pixel to be corrected e is calculated, the correction parameter corresponding to Pixel to be corrected e can be determined based on the neighboring difference between Pixel a and Pixel to be corrected e, and then, after the neighboring difference between Pixel b and Pixel to be corrected e is calculated, the correction parameter corresponding to Pixel to be corrected e is updated based on the neighboring difference between Pixel b and Pixel to be corrected e, and then, after the neighboring difference between Pixel c and Pixel to be corrected e is calculated, the correction parameter corresponding to Pixel to be corrected e is updated based on the neighboring difference between Pixel c and Pixel to be corrected e, and then, after the neighboring difference between Pixel d and Pixel to be corrected e is calculated, the correction parameter corresponding to Pixel to be corrected e is updated based on the neighboring difference between Pixel d and Pixel to be corrected e.

S204, correcting the pixel to be corrected based on the correction parameter to obtain a corrected thermal image.

Specifically, the sum of the correction parameter and the pixel value of the pixel to be corrected can be used as the corrected pixel value of the respective pixel in the thermal image to be corrected. After the pixel value of each pixel to be corrected in the thermal image to be corrected is replaced with the corrected pixel value, a corrected thermal image is obtained.

In a possible implementation, determining the correction parameter corresponding to the pixel to be corrected based on the neighboring difference includes: determining the correction parameter corresponding to the pixel to be corrected according to the neighboring difference and a preset correction degree parameter corresponding to the motion state.

Since the scene changes greatly when the thermal imaging device is in high-speed motion, the selection of the noise interference pixel is relatively easy and reliable. Therefore, the preset correction degree parameter can be set to larger, which can speed up the correction speed and improve the correction efficiency without affecting the correction accuracy. The scene changes a little when the thermal imaging device is in a low-speed motion state, and the reliability of selection of the noise interference pixel is reduced. Therefore, the preset correction degree parameter can be set to smaller, thus the priority to ensuring the correction accuracy is provided. The scene changes slightly when the thermal imaging device is in a static state, and the selection of the noise interference pixel is difficult and the reliability is low. Therefore, the preset correction degree parameter can be set to further smaller, thus the priority to ensuring the correction accuracy is provided. Therefore, the preset correction degree parameters corresponding to different motion states are different, and the value of the preset correction degree parameter is larger when the thermal imaging device is in high-speed motion, moderate when the thermal imaging device is in low-speed motion, and extremely small when the thermal imaging device is in a static state.

Specifically, for each pixel to be corrected, the product of the neighboring difference, the preset coefficient and the preset correction degree parameter may be determined as the correction parameter corresponding to the pixel to be corrected.

The following steps C1-C6 combine specific formulas to illustrate a calculation method of the correction parameter:

Step C1, defining an all-zero correction parameter matrix.

Step C2, traversing all of pixels in the thermal image to be corrected with a noise interference pixel existed in a neighborhood of the pixel, using the following formula to calculate the neighboring difference between the currently traversed pixel and the noise interference pixel in the neighborhood of this pixel:

$$\text{dif} = Y(i, j) - Y_{\text{neighbor}} + \text{Correct1}(i, j) - \text{Correct1}_{\text{neighbor}}$$

wherein, dif is the neighboring difference between the currently traversed pixel and the noise interference pixel in the neighborhood of this pixel, $Y(i, j)$ is a pixel value of the currently traversed pixel $(i, j)$ of the thermal image to be corrected, $Y_{\text{neighbor}}$ is a pixel value of the noise interference pixel in the neighborhood of the currently traversed pixel $(i, j)$, Correct1 is a correction parameter matrix, $\text{Correct1}(i, j)$ is a value of an element in the correction parameter matrix corresponding to the currently traversed pixel, and $\text{Correct1}_{\text{neighbor}}$ is a value of an element in the correction parameter matrix corresponding to the noise interference pixel in the neighborhood of the currently traversed pixel $(i, j)$.

Step C3, determining whether the neighboring difference is greater than a preset difference threshold corresponding to the motion state, and if the neighboring difference is greater than a preset difference threshold corresponding to the motion state, executing step C4, otherwise executing step C5.

Step C4, setting the preset difference threshold to 0.

Step C5, updating the correction parameter matrix by using the following formula, according to the preset difference threshold and a preset correction degree parameter corresponding to the motion state:

$$\text{Correct1}_{\text{neighbor}} = \text{Correct1}_{\text{neighbor}} + k*\text{dif}*\text{lr}$$

wherein, dif is the neighboring difference between the currently traversed pixel and the noise interference pixels in the neighborhood of this pixel, lr is the preset correction degree parameter corresponding to the motion state, the $\text{Correct1}_{\text{neighbor}}$ on the right side of the equation is a value of an element in the correction parameter matrix at the corresponding position to the noise interference pixel, and the $\text{Correct1}_{\text{neighbor}}$ on the right side of the equation is an updated correction parameter matrix. According to the formula, a non-zero dif value can be calculated only when there is the noise interference pixel in the neighborhood pixel of the currently traversed pixel, and the value of the Correct1 matrix neighborhood element can be updated, otherwise the value of the Correct1 matrix neighborhood element cannot be updated. Therefore, in this embodiment, the pixel in the thermal image to be corrected with a noise interference pixel existed in the neighborhood of the pixel can be found out according to the noise interference pixel for traversal, thereby reducing the amount of calculation for calculating the target correction matrix.

Step C6: obtaining a final updated target correction parameter matrix after all of the pixels in the thermal image to be corrected with a noise interference pixel existed in the neighborhood of the respective pixel are traversed. The correction parameter of the pixel to be corrected is an element value at the corresponding position in the target matrix.

In the embodiment of the present application, preset correction degree parameters corresponding to different motion states are different. Specifically, the different preset correction degree parameters corresponding to the different motion states being different, includes: a value of the preset correction degree parameter corresponding to the high-speed motion state is greater than a value of the preset correction degree parameter corresponding to the low-speed motion state, and/or the value of the preset correction degree parameter corresponding to the low-speed motion state is greater than a value of the preset correction degree parameter corresponding to the static state.

In the embodiment of the present application, since the correction effects corresponding to individual frames of the thermal image to be corrected can be accumulated, that is, the correction effect of the current thermal image to be corrected will affect the correction of the next frame of the thermal image to be corrected, it is necessary to reduce the value of the preset correction degree parameter as the number of corrected images increases, to reduce the influence of the correction effect of the thermal image to be corrected on the correction of the next frame of the thermal image to be corrected, so as to avoid having an influence on the image correction accuracy of the next frame of the thermal image to be corrected caused by the excessive influence of the correction effect of the thermal image to be corrected on the correction of the next frame of the thermal image to be corrected. Therefore, when the thermal imaging device is in a high-speed motion state, the preset correction degree parameter can decay as the number of correction images increases. When the thermal imaging device is in a low-speed motion state, the preset correction degree parameter can also decay as the number of correction images increases. When the thermal imaging device is in a static state, the preset correction degree parameter usually does not decay.

Specifically, when the thermal imaging device is in a high-speed motion state, the decaying rule of the preset correction degree parameter decaying as the number of corrected images increases can be as follows: for correcting every accumulated 128 frames of images in the high-speed motion state, the respective preset correction degree parameter can decay to 1/2 of the original, and normally, decaying can be performed up to 3 times.

When the thermal imaging device is in a low-speed motion state, the decaying rule of the preset correction degree parameter decaying as the number of corrected images increases can be as follows: for correcting every accumulated 128 frames of images in the low-speed motion state, the respective preset correction degree parameter can decay to 1/2 of the original, and normally, decaying can be performed up to 3 times.

It can be seen that in the present implementation, the calculation of the correction parameter utilizes the motion state of the thermal imaging device, wherein the upper limits of the dif values in the high-speed motion state and the high-speed motion state is large, and the upper limit of the dif in the static state is small, and 0 is set when each dif value exceeds the upper limit, and the preset correction degree parameter corresponding to the high-speed motion state is greater than the preset correction degree parameter corresponding to the low-speed motion state, and the preset correction degree parameter corresponding to the low-speed motion state is greater than the preset correction degree parameter corresponding to the static state, and the high-speed and low-speed motion states contain a preset correction degree parameter decaying mechanism, and the calculation of the correction parameter also utilizes noise interference pixels, that is, only the pixel with a noise interference pixel in the neighborhood of the pixel can be used for updating, and a central pixel does not need to be a noise interference pixel, which further reduces the amount of calculation of the correction parameter and improves the image correction efficiency.

In a possible implementation, performing a preliminary correction on the target thermal image to obtain a preliminarily corrected thermal image may include the following steps D1 to D2:

Step D1: acquiring an accumulating correction parameter obtained by accumulating a correction parameter corresponding to each of previous thermal images of the target thermal image.

Step D2: performing a preliminary correction on the target thermal image based on the accumulating correction parameter to obtain the preliminarily corrected thermal image.

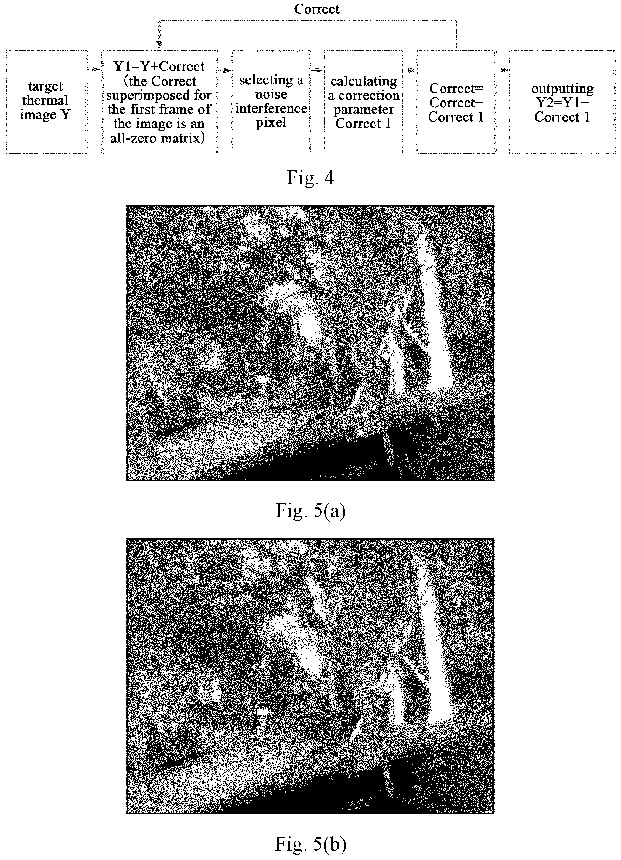

Specifically, Figure 4 is a schematic diagram of correcting a thermal imaging image. Referring to Figure 4, after the target thermal image Y is read, the target thermal image Y can be preliminarily corrected by using the accumulating correction parameter Correct, that is, Y1=Y+Correct, to offset the fixed pattern noise in the target thermal image Y, and to obtain a preliminarily corrected thermal image Y1; if the target thermal image Y is the first frame image, the all-zero accumulating correction parameter matrix can be superimposed on the target thermal image Y to obtain the preliminarily corrected thermal image Y1.

If the thermal image to be corrected is a preliminarily corrected thermal image obtained by performing the preliminary correction on the target thermal image, as shown in Figure 4, then the noise interference pixel can be selected for the preliminarily corrected thermal image Y1, and the correction parameter Correct1 can be calculated, and then the preliminarily corrected thermal image Y1 can be corrected with the correction parameter Correct1 to obtain the corrected thermal image Y2 for outputting. At the same time, after obtaining the correction parameter Correct1, the correction parameter Correct1 can also be accumulated into the accumulating correction parameter Correct to update the accumulating correction parameter Correct, and then the updated accumulating correction parameter Correct can be used to perform preliminary correction on the next frame of the thermal image to be corrected.

Wherein, the accumulating correction parameter Correct is obtained by accumulating the correction parameter corresponding to each of the previous thermal images of the target thermal image Y For example, the correction parameter Correct1 corresponding to the target thermal image Y can be accumulated into Correct (Correct=Correct+Correct1) to perform preliminary correction on the next frame of thermal image to be corrected, so as to offset the fixed pattern noise in the next frame of thermal image to be corrected.

In addition, as the number of corrected thermal images increases, the accumulating correction parameter Correct is updated with a low correction degree parameter according to each motion state, to monitor the newly added fixed pattern noise and continuously optimize the image. At this time, the neighboring differences of the respective pixels in the current corrected thermal image Y2 and in the preliminarily corrected thermal image Y1 needs to be retained for use in determining the noise interference pixel in the next frame of the thermal image to be corrected.

In one implementation, since it is necessary to use the neighboring differences of pixels at respective positions in the thermal image to be corrected and the reference frame thermal image when determining the noise interference pixel of the thermal image to be corrected, after obtaining the neighboring differences of the respective pixels in the current corrected thermal image Y2 and in the preliminarily corrected thermal image Y1, the difference value between the neighboring difference and the correction parameter can also be determined as the neighboring difference between the corresponding pixel in the corrected thermal image and its neighborhood pixel, which is used to determine the noise interference pixel in the next frame of thermal image to be corrected.

It can be seen that in the above implementation, the correction parameters calculated for individual frames of the thermal image to be corrected are accumulated and used to perform preliminary correction on the next frame of the thermal image to be corrected, which not only improves the fault tolerance rate, but also corrects the previous correction error, thereby ensuring that the correction is on the right track. In addition, the motion state is combined with the target screening condition to together determine the noise interference pixel of the preliminarily corrected thermal image, and then the noise interference pixel of the preliminarily corrected thermal image is used to perform fine correction on the preliminarily corrected thermal image, which greatly improves the accuracy of image correction.

Figure 5(a) is an outdoor thermal image to be corrected, and Figure 5(b) is a corrected thermal image obtained by correcting the outdoor thermal image to be corrected shown in Figure 5(a) by using the method for correcting a thermal imaging image provided by the present application. By comparing Figure 5(a) and Figure 5(b), it can be seen that compared with the thermal image to be corrected shown in Figure 5(a), the fixed pattern noise such as pit and vertical line in the corrected thermal image shown in Figure 5(b) has been corrected and removed.

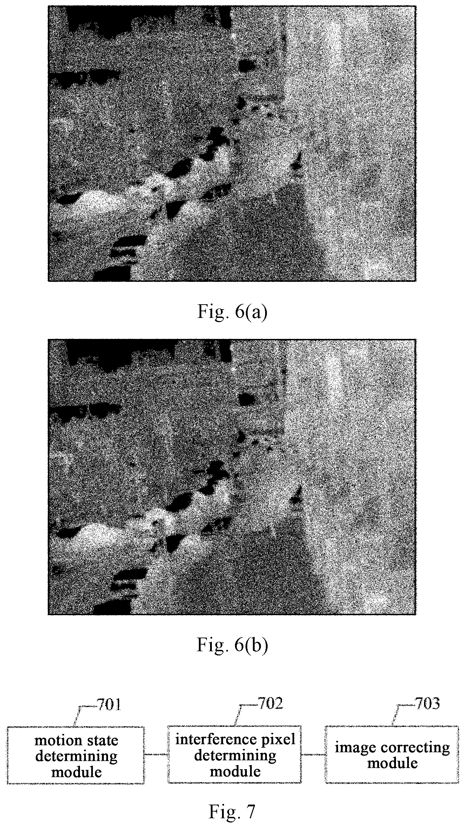

Figure 6(a) is another outdoor thermal image to be corrected, and Figure 6(b) is a corrected thermal image obtained by correcting the outdoor thermal image to be corrected shown in Figure 6(a) by using the method for correcting a thermal imaging image provided by the present application. By comparing Figure 6(a) and Figure 6(b), it can be seen that compared with the thermal image to be corrected shown in Figure 6(a), the fixed pattern noise such as pit and vertical line in the corrected thermal image shown in Figure 6(b) has been corrected and removed.

Corresponding to the above-mentioned method for correcting a thermal imaging image, an embodiment of the present application further provides an apparatus for correcting a thermal imaging image. The apparatus for correcting a thermal imaging image provided by the embodiment of the present application is introduced below. As shown in Figure 7, the apparatus for correcting a thermal imaging image includes:

a motion state determining module 701, configured to determine a motion state of a thermal imaging device corresponding to a thermal image to be corrected;

an interference pixel determining module 702, configured to determine a noise interference pixel from the thermal image to be corrected by using a target screening condition corresponding to the motion state; wherein the target screening conditions corresponding to different motion states are different;

an image correcting module 703, configured to correct the thermal image to be corrected based on the noise interference pixel.

By adopting the apparatus provided by the embodiment of the present application, a motion state of a thermal imaging device corresponding to a thermal image to be corrected is determined; a noise interference pixel is determined from the thermal image to be corrected by using a target screening condition corresponding to the motion state; and the thermal image to be corrected is corrected based on the noise interference pixel. Different motion states correspond to different target screening conditions. That is, the noise interference pixels corresponding to different motion states can be determined for different motion states of the thermal imaging device, and then the thermal image to be corrected can be corrected by using the noise interference pixels corresponding to the motion state, thereby achieving an effect of accurately correcting the thermal image to be corrected in different motion states, and improving the accuracy of image correction.

Optionally, the apparatus further includes:
a neighboring difference determining module (not shown in Figure 7), configured to determine a neighboring difference of each pixel in the thermal image to be corrected relative to its neighboring pixel; wherein, the constraints for the neighboring difference of the noise interference pixel relative to its neighboring pixel in the target screening conditions corresponding to different motion states are different.

Optionally, the motion state includes at least two of the following motion states: a high-speed motion state, a low-speed motion state, and a static state;

the target screening condition includes that: if a grayscale of the pixel in the thermal image to be corrected and a grayscale of the pixel at a corresponding position in a reference frame thermal image indicate different targets, and a difference value between a neighboring difference of the pixel in the thermal image to be corrected and a neighboring difference of a pixel at the corresponding position in the reference frame thermal image is less than a preset difference value threshold, the pixel at the corresponding position in the thermal image to be corrected is determined as the noise interference pixel;

the constraints for the neighboring difference of the noise interference pixel relative to its neighboring pixel in the target screening conditions corresponding to different motion states being different includes that: a preset difference value threshold corresponding to the high-speed motion state is greater than a preset difference value threshold corresponding to the low-speed motion state, and/or the preset difference value threshold corresponding to the low-speed motion state is greater than a preset difference value threshold corresponding to the static state.

Optionally, the target screening condition corresponding to the high-speed motion state further includes that: if the grayscale of the pixel in the thermal image to be corrected and the grayscale of the pixel at the corresponding position in the reference frame thermal image indicate the same target, and the difference value between the neighboring difference of the pixel in the thermal image to be corrected and the neighboring difference of the pixel at the corresponding position in the reference frame thermal image is less than the preset difference value threshold, the pixel at the corresponding position in the thermal image to be corrected is determined as the noise interference pixel;
in the target screening condition corresponding to the high-speed motion state, the preset difference threshold corresponding to the case where the grayscale of the pixel in the thermal image to be corrected and the grayscale of the pixel at the corresponding position in the reference frame thermal image indicate different targets is greater than the preset difference value threshold corresponding to the case where they indicate the same target.

Optionally, the target screening condition further includes that: the sum of the neighboring difference of the pixel in the thermal image to be corrected and the neighboring difference of the pixel at the corresponding position in the reference frame thermal image is less than a preset sum threshold;
the constraints for the neighboring difference of the noise interference pixel relative to its neighboring pixel in the target screening conditions corresponding to different motion states being different, includes that: a preset sum threshold corresponding to the high-speed motion state is greater than a preset sum threshold corresponding to the low-speed motion state, and/or the preset sum threshold corresponding to the low-speed motion state is greater than a preset sum threshold corresponding to the static state.

Optionally, the target screening condition corresponding to the high-speed motion state further includes that: in the target screening condition corresponding to the high-speed motion state, the preset sum threshold corresponding to the case where the grayscale of the pixel in the thermal image to be corrected and the grayscale of the pixel at the corresponding position in the reference frame thermal image indicate different targets is greater than the preset sum threshold corresponding to the case where they indicate the same target.

Optionally, the image correcting module 703 includes:

a difference determining sub-module (not shown in Figure 7), configured to, for each pixel in the thermal image to be corrected with a noise interference pixel existed in the neighborhood of the pixel, determine the neighboring difference between the pixel and the noise interference pixel in the neighborhood of the pixel;
a pixel determining sub-module (not shown in Figure 7), configured to, if the neighboring difference meets a preset difference condition, determine the noise interference pixel as the pixel to be corrected; wherein the preset difference condition indicates that the pixel and the noise interference pixel in the neighborhood of the pixel correspond to the same target, and the different motion states correspond to different preset difference conditions;
a correction parameter determining sub-module (not shown in Figure 7), configured to determine a correction parameter corresponding to the pixel to be corrected based on the neighboring difference;
an image correcting sub-module (not shown in Figure 7), configured to correct the pixel to be corrected based on the correction parameter to obtain a corrected thermal image.

Optionally, the preset difference condition includes that: the neighboring difference is not greater than a preset difference threshold, and the preset difference conditions corresponding to different motion states being different include that: a preset difference threshold corresponding to the high-speed motion state is greater than a preset difference threshold corresponding to the low-speed motion state, and/or the preset difference threshold corresponding to the low-speed motion state is greater than a preset difference threshold corresponding to the static state.

Optionally, the correction parameter determining sub-module is specifically configured to determine a correction parameter corresponding to the pixel to be corrected based on the neighboring difference and a preset correction degree parameter corresponding to the motion state; wherein the preset correction degree parameters corresponding to different motion states are different.

Optionally, the preset correction degree parameters corresponding to the different motion states being different, includes: a value of the preset correction degree parameter corresponding to the high-speed motion state is greater than a value of the preset correction degree parameter corresponding to the low-speed motion state, and/or the value of the preset correction degree parameter corresponding to the low-speed motion state is greater than a value of the preset correction degree parameter corresponding to the static state.

Optionally, the motion state determining module 701 is specifically configured to acquire multiple groups of angular velocities of the thermal imaging device corresponding to the thermal image to be corrected, wherein each group of angular velocities includes at least one of a swing angular velocity, a tilt angular velocity, and a flip angular velocity; calculate a range and a sum of each type of the angular velocity; determine whether the motion state of the thermal imaging device is a high-speed motion state, a low-speed motion state or a static state based on the range and the sum.

Optionally, the motion state determining module 701 is specifically configured to determine the motion state of the thermal imaging device as the high-speed motion state if the range is not less than a first preset range threshold and the sum is not less than a first preset sum threshold; determine the motion state of the thermal imaging device as the low-speed motion state if the range is less than the first preset range threshold and the sum is less than the first preset sum threshold, and when the range is greater than a second preset range threshold and the sum is greater than a second preset sum threshold, wherein the first preset range threshold is greater than the second preset range threshold, and the first preset sum threshold is greater than the second preset sum threshold; determine the motion state of the thermal imaging device as the static state if the range is not greater than the second preset range threshold and the sum is not greater than the second preset sum threshold.

Optionally, the thermal image to be corrected is a target thermal image to be processed, or the thermal image to be corrected is a preliminarily corrected thermal image obtained by performing preliminary correction on the target thermal image.

Optionally, the apparatus further includes:

a preliminarily correcting module (not shown in Figure 7), configured to acquire an accumulating correction parameter obtained by accumulating a correction parameter corresponding to each of previous thermal images of the target thermal image; performing a preliminarily correction on the target thermal image based on the accumulating correction parameter to obtain a preliminarily corrected thermal image.

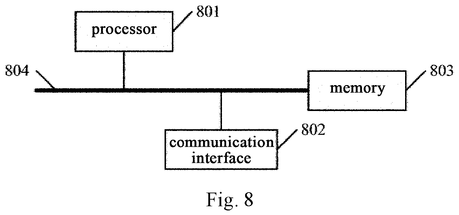

An embodiment of the present application further provides an electronic device, as shown in Figure 8, including a processor 801, a communication interface 802, a memory 803 and a communication bus 804, wherein the processor 801, the communication interface 802, and the memory 803 communicate with each other through the communication bus 804.

The memory 803 is configured to store a computer program;

The processor 801 is configured to implement the steps of the method for correcting a thermal imaging image described in any of the above embodiments when executing the program stored in the memory 803.

The communication bus mentioned in the above electronic device can be a Peripheral Component Interconnect (PCI) bus or an Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is used for communication between the above electronic device and other devices.

The memory may include a random access memory (RAM) or a non-volatile memory (NVM), such as at least one disk memory. Optionally, the memory may also be at least one storage device located far away from the aforementioned processor.

The above-mentioned processor can be a general-purpose processor, including a central processing unit (CPU), a network processor (NP), etc.; it can also be a digital signal processor (DSP), an application specific integrated circuit (ASIC), a field programmable gate array (FPGA) or other programmable logic devices, discrete gate or transistor logic devices, discrete hardware components.

In another embodiment provided by the present application, a computer-readable storage medium is provided, which stores a computer program therein, which when executed by a processor, implements any step of the method for correcting a thermal imaging image.

In another embodiment provided by the present application, a computer program product containing instructions is further provided, which, when running on a computer, cause the computer to carry out any one of the methods for correcting a thermal imaging image in the above embodiments.

In the above embodiments, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available medium. The usable media may be magnetic media (such as a floppy disk, a hard disk, a magnetic tape), optical media (such as DVD), or semiconductor media (such as Solid State Disk (SSD)) and the like.

It should be noted that in this article, relational terms such as first and second are only to distinguish one entity or operation from another entity or operation, and do not necessarily require or imply any actual relationship or order between these entities or operations. Moreover, the terms "include", "contain", or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including one..." do not exclude the existence of other identical elements in the process, method, item, or device that includes the elements.

The various embodiments in this specification are described in a related manner. Each embodiment focuses on the differences from other embodiments, and the same and similar parts between the various embodiments can be referred to each other. Especially, for the embodiments of the apparatus, electronic device, computer-readable storage medium and computer program product, the description is relatively simple because it is basically similar to the embodiment of the method, and the relevant points can be referred to the partial description of the embodiment of the method.

The above descriptions are only preferred embodiments of the present application, and are not intended to limit the present application. Any modifications, equivalent replacements, improvements and the like made within the spirit and principles of the present application shall be included within the scope of protection of the present application.

**Claims**

1.    A method for correcting a thermal imaging image, which comprises:

determining a motion state of a thermal imaging device corresponding to a thermal image to be corrected;
determining a noise interference pixel from the thermal image to be corrected by using a target screening condition corresponding to the motion state; wherein target screening conditions corresponding to different motion states are different;
performing correction on the thermal image to be corrected based on the noise interference pixel.

2.    The method according to claim 1, wherein the method further comprises:

determining a neighboring difference of each pixel in the thermal image to be corrected relative to a neighboring pixel of the pixel;
wherein, constraints for neighboring difference of the noise interference pixel relative to a neighboring pixel of the noise interference pixel are different in the target screening conditions corresponding to the different motion states.

3.    The method according to claim 2, wherein the motion states comprise at least two of following motion states: a high-speed motion state, a low-speed motion state, and a static state;

the target screening condition comprises that: if a grayscale of a pixel in the thermal image to be corrected and a grayscale of a pixel at a corresponding position in a reference frame thermal image indicate different targets, and a difference value between a neighboring difference of the pixel in the thermal image to be corrected and a neighboring difference of the pixel at the corresponding position in the reference frame thermal image is less than a preset difference value threshold, the pixel at a corresponding position in the thermal image to be corrected is determined as the noise interference pixel;
the constraints for the neighboring difference of the noise interference pixel relative to the neighboring pixel of the noise interference pixel being different in the target screening conditions corresponding to the different motion states, comprises: a preset difference value threshold corresponding to the high-speed motion state is greater than a preset difference value threshold corresponding to the low-speed motion state, and/or the preset difference value threshold corresponding to the low-speed motion state is greater than a preset difference value threshold corresponding to the static state.

4.    The method according to claim 3, wherein a target screening condition corresponding to the high-speed motion state further comprises that: if the grayscale of the pixel in the thermal image to be corrected and the grayscale of the pixel at the corresponding position in the reference frame thermal image indicate a same target, and the difference value between the neighboring difference of the pixel in the thermal image to be corrected and the neighboring difference of the pixel at the corresponding position in the reference frame thermal image is less than a preset difference value threshold, the pixel at the corresponding position in the thermal image to be corrected is determined as the noise interference pixel;

in the target screening condition corresponding to the high-speed motion state, the preset difference value threshold corresponding to a case where the grayscale of the pixel in the thermal image to be corrected and the grayscale of the pixel at the corresponding position in the reference frame thermal image indicate the different targets is greater than the preset difference value threshold corresponding to a case where the grayscale of the pixel in the thermal image to be corrected and the grayscale of the pixel at the corresponding position in the reference frame thermal image indicate the same target.

5. The method according to any one of claims 2 to 4, wherein the target screening condition further comprises that: the sum of the neighboring difference of the pixel in the thermal image to be corrected and the neighboring difference of the pixel at the corresponding position in the reference frame thermal image is less than a preset sum threshold;

the constraints for the neighboring difference of the noise interference pixel relative to the neighboring pixel of the noise interference pixel being different in the target screening conditions corresponding to the different motion states, comprises: a preset sum threshold corresponding to the high-speed motion state is greater than a preset sum threshold corresponding to the low-speed motion state, and/or the preset sum threshold corresponding to the low-speed motion state is greater than a preset sum threshold corresponding to the static state.

6. The method according to claim 5, wherein a target screening condition corresponding to the high-speed motion state further comprises:

in the target screening condition corresponding to the high-speed motion state, a preset sum threshold corresponding to a case where a grayscale of a pixel in the thermal image to be corrected and a grayscale of a pixel at a corresponding position in the reference frame thermal image indicate different targets is greater than a preset sum threshold corresponding to a case where a grayscale of a pixel in the thermal image to be corrected and a grayscale of a pixel at a corresponding position in the reference frame thermal image indicate a same target.

7. The method according to claim 3, wherein performing the correction on the thermal image to be corrected based on the noise interference pixel comprises:

for each pixel in the thermal image to be corrected with a noise interference pixel existed in neighborhood of the pixel, determining a neighboring difference between the pixel and the noise interference pixel existed in the neighborhood of the pixel;

if the neighboring difference meets a preset difference condition, determining the noise interference pixel as a pixel to be corrected; wherein the preset difference condition indicates that the pixel and the noise interference pixel existed in the neighborhood of the pixel correspond to the same target, and preset difference conditions corresponding to the different motion states are different;

determining a correction parameter corresponding to the pixel to be corrected based on the neighboring difference;

performing correction on the pixel to be corrected based on the correction parameter to obtain a corrected thermal image.

8. The method according to claim 7, wherein the preset difference condition comprises that the neighboring difference is not greater than a preset difference threshold, and the preset difference conditions corresponding to the different motion states being different comprises that: a preset difference threshold corresponding to the high-speed motion state is greater than a preset difference threshold corresponding to the low-speed motion state, and/or the preset difference threshold corresponding to the low-speed motion state is greater than a preset difference threshold corresponding to the static state.

9. The method according to claim 7, wherein determining the correction parameter corresponding to the pixel to be corrected based on the neighboring difference comprises:

determining the correction parameter corresponding to the pixel to be corrected based on the neighboring difference and a preset correction degree parameter corresponding to the motion state; wherein the preset correction degree parameters corresponding to different motion states are different.

10. The method according to claim 9, wherein the preset correction degree parameters corresponding to the different motion states being different, comprises: a value of a preset correction degree parameter corresponding to the high-speed motion state is greater than a value of a preset correction degree parameter corresponding to the low-speed motion state, and/or the value of the preset correction degree parameter corresponding to the low-speed motion state is greater than a value of a preset correction degree parameter corresponding to the static state.

11. The method according to claim 1, wherein determining the motion state of the thermal imaging device corresponding to the thermal image to be corrected comprises:

acquiring multiple groups of angular velocities of the thermal imaging device corresponding to the thermal image to be corrected, wherein each group of angular velocities comprises at least one of a swing angular velocity, a tilt angular velocity, and a flip angular velocity;
calculating a range and a sum for each type of the angular velocity;
determining whether the motion state of the thermal imaging device is a high-speed motion state, a low-speed motion state or a static state based on the range and the sum.

12. The method according to claim 11, wherein determining whether the motion state of the thermal imaging device is the high-speed motion state, the low-speed motion state or the static state based on the range and the sum comprises:

if the range is not less than a first preset range threshold and the sum is not less than a first preset sum threshold, determining the motion state of the thermal imaging device as the high-speed motion state;
if the range is less than the first preset range threshold and the sum is less than the first preset sum threshold, and when the range is greater than a second preset range threshold and the sum is greater than a second preset sum threshold, determining the motion state of the thermal imaging device as the low-speed motion state; wherein the first preset range threshold is greater than the second preset range threshold, and the first preset sum threshold is greater than the second preset sum threshold;
if the range is not greater than the second preset range threshold and the sum is not greater than the second preset sum threshold, determining the motion state of the thermal imaging device as the static state.

13. The method according to any one of claims 1-4 or 6-12, wherein the thermal image to be corrected is a target thermal image to be processed, or the thermal image to be corrected is a preliminarily corrected thermal image obtained by performing preliminary correction on the target thermal image.

14. The method according to claim 13, wherein the method further comprises:

acquiring an accumulating correction parameter obtained by accumulating a correction parameter corresponding to each of previous thermal images of the target thermal image;
performing the preliminary correction on the target thermal image based on the accumulating correction parameter to obtain the preliminarily corrected thermal image.

15. An apparatus for correcting a thermal imaging image, which comprises:

a motion state determining module, configured to determine a motion state of a thermal imaging device corresponding to a thermal image to be corrected;
an interference pixel determining module, configured to determine a noise interference pixel from the thermal image to be corrected by using a target screening condition corresponding to the motion state; wherein target screening conditions corresponding to different motion states are different;
an image correcting module, configured to perform correction on the thermal image to be corrected based on the noise interference pixel.

16. The apparatus according to claim 15, wherein the apparatus further comprises:

a neighboring difference determining module, configured to determine a neighboring difference of each pixel in the thermal image to be corrected relative to a neighboring pixel of the pixel; wherein, constraints for neighboring difference of the noise interference pixel relative to a neighboring pixel of the noise interference pixel are different in the target screening conditions corresponding to the different motion states;
the motion states comprise at least two of following motion states: a high-speed motion state, a low-speed motion state, and a static state;
the target screening condition comprises that; if a grayscale of a pixel in the thermal image to be corrected and a grayscale of a pixel at a corresponding position in a reference frame thermal image indicate different targets, and a difference value between a neighboring difference of the pixel in the thermal image to be corrected and a neighboring difference of the pixel at the corresponding position in the reference frame thermal image is less than a preset difference value threshold, the pixel at a corresponding in the thermal image to be corrected is determined as the noise interference pixel;

the constraints for the neighboring difference of the noise interference pixel relative to the neighboring pixel of the noise interference pixel being different in the target screening conditions corresponding to the different motion states, comprises: a preset difference value threshold corresponding to the high-speed motion state is greater than a preset difference value threshold corresponding to the low-speed motion state, and/or the preset difference value threshold corresponding to the low-speed motion state is greater than a preset difference value threshold corresponding to the static state;

a target screening condition corresponding to the high-speed motion state further comprises that: if the grayscale of the pixel in the thermal image to be corrected and the grayscale of the pixel at the corresponding position in the reference frame thermal image indicate a same target, and the difference value between the neighboring difference of the pixel in the thermal image to be corrected and the neighboring difference of the pixel at the corresponding position in the reference frame thermal image is less than a preset difference value threshold, the pixel at the corresponding position in the thermal image to be corrected is determined as the noise interference pixel;

in the target screening condition corresponding to the high-speed motion state, the preset difference value threshold corresponding to a case where the grayscale of the pixel in the thermal image to be corrected and the grayscale of the pixel at the corresponding position in the reference frame thermal image indicate the different targets is greater than the preset difference value threshold corresponding to a case where the grayscale of the pixel in the thermal image to be corrected and the grayscale of the pixel at the corresponding position in the reference frame thermal image indicate the same target;

the target screening condition further comprises that: the sum of the neighboring difference of the pixel in the thermal image to be corrected and the neighboring difference of the pixel at the corresponding position in the reference frame thermal image is less than a preset sum threshold;

the constraints for the neighboring difference of the noise interference pixel relative to the neighboring pixel of the noise interference pixel being different in the target screening conditions corresponding to the different motion states, comprises: a preset sum threshold corresponding to the high-speed motion state is greater than a preset sum threshold corresponding to the low-speed motion state, and/or the preset sum threshold corresponding to the low-speed motion state is greater than a preset sum threshold corresponding to the static state;

the target screening condition corresponding to the high-speed motion state further comprises:

in the target screening condition corresponding to the high-speed motion state, a preset sum threshold corresponding to a case where the grayscale of the pixel in the thermal image to be corrected and the grayscale of the pixel at the corresponding position in the reference frame thermal image indicate different targets is greater than a preset sum threshold corresponding to a case where the grayscale of the pixel in the thermal image to be corrected and the grayscale of the pixel at the corresponding position in the reference frame thermal image indicate a same target;

the image correcting module comprises:

a difference determining sub-module, configured to, for each pixel in the thermal image to be corrected with a noise interference pixel existed in neighborhood of the pixel, determine a neighboring difference between the pixel and the noise interference pixel existed in the neighborhood of the pixel;

a pixel determining sub-module, configured to, if the neighboring difference meets a preset difference condition, determine the noise interference pixel as a pixel to be corrected; wherein the preset difference condition indicates that the pixel and the noise interference pixel existed in the neighborhood of the pixel correspond to the same target, and preset difference conditions corresponding to the different motion states are different;

a correction parameter determining sub-module, configured to determine a correction parameter corresponding to the pixel to be corrected based on the neighboring difference;

an image correcting sub-module, configured to perform correction on the pixel to be corrected based on the correction parameter to obtain a corrected thermal image;

the preset difference condition comprises that the neighboring difference is not greater than a preset difference threshold, and the preset difference conditions corresponding to the different motion states being different comprises that: a preset difference threshold corresponding to the high-speed motion state is greater than a preset difference threshold corresponding to the low-speed motion state, and/or the preset difference threshold corresponding to the low-speed motion state is greater than a preset difference threshold corresponding to the static state;

the correction parameter determining sub-module, specifically configured to determine the correction parameter corresponding to the pixel to be corrected based on the neighboring difference and a preset correction degree parameter corresponding to the motion state; wherein the preset correction degree parameters corresponding to different motion states are different;

the preset correction degree parameters corresponding to the different motion states being different, comprises: a value of the preset correction degree parameter corresponding to the high-speed motion state is greater than a value of the preset correction degree parameter corresponding to the low-speed motion state, and/or the value of the preset correction degree parameter corresponding to the low-speed motion state is greater than a value of the preset correction degree parameter corresponding to the static state;

the motion state determining module, specifically configured to acquire multiple groups of angular velocities of the thermal imaging device corresponding to the thermal image to be corrected, wherein each group of angular velocities comprises at least one of a swing angular velocity, a tilt angular velocity, and a flip angular velocity; calculate a range and a sum for each type of the angular velocity; determine whether the motion state of the thermal imaging device is a high-speed motion state, a low-speed motion state or a static state based on the range and the sum;

the motion state determining module, specifically configured to determine the motion state of the thermal imaging device as the high-speed motion state if the range is not less than a first preset range threshold and the sum is not less than a first preset sum threshold; determine the motion state of the thermal imaging device as the low-speed motion state if the range is less than the first preset range threshold and the sum is less than the first preset sum threshold, and when the range is greater than a second preset range threshold and the sum is greater than a second preset sum threshold; wherein the first preset range threshold is greater than the second preset range threshold, and the first preset sum threshold is greater than the second preset sum threshold; determine the motion state of the thermal imaging device as the static state if the range is not greater than the second preset range threshold and the sum is not greater than the second preset sum threshold;

the thermal image to be corrected is a target thermal image to be processed, or the thermal image to be corrected is a preliminarily corrected thermal image obtained by performing preliminary correction on the target thermal image;

the apparatus further comprises:

a preliminarily correcting module, configured to acquire an accumulating correction parameter obtained by accumulating a correction parameter corresponding to each of previous thermal images of the target thermal image; performing the preliminary correction on the target thermal image based on the accumulating correction parameter to obtain the preliminarily corrected thermal image.

17. An electronic device, which comprises a processor, a communication interface, a memory and a communication bus, wherein the processor, the communication interface and the memory communicate with each other through the communication bus;

the memory is configured to store a computer program;
the processor is configured to implement the method steps according to any one of claims 1 to 14 when executing the program stored in the memory.

18. A computer-readable storage medium, which stores a computer program therein, which when executed by a processor, implements the method steps according to any one of claims 1 to 14.

19. A computer program product containing instructions, which when executed by a computer, implements the method steps according to any one of claims 1 to 14.

determining a motion state of a thermal imaging device corresponding to a thermal image to be corrected ——S101

determining a noise interference pixel from the thermal image to be corrected by using a target screening condition corresponding to the motion state ——S102

performing correction on the thermal image to be corrected based on the noise interference pixel ——S103

Fig. 1

for each pixel in a thermal image to be corrected with a noise interference pixel existed in the neighborhood of the pixel, determining a neighboring difference between the pixel and the noise interference pixel existed in the neighborhood of the pixel ——S201

if the neighboring difference meets a preset difference condition, determining the noise interference pixel as a pixel to be corrected ——S202

determining a correction parameter corresponding to the pixel to be corrected based on the neighboring difference ——S203

performing correction on the pixel to be corrected based on the correction parameter to obtain a corrected thermal image ——S204

Fig. 2

Fig. 3

Correct

| target thermal image Y | → | Y1=Y+Correct (the Correct superimposed for the first frame of the image is an all-zero matrix) | → | selecting a noise interference pixel | → | calculating a correction parameter Correct 1 | → | Correct= Correct+ Correct 1 | → | outputting Y2=Y1+ Correct 1 |

Fig. 4

Fig. 5(a)

Fig. 5(b)

Fig. 6(a)

Fig. 6(b)

Fig. 7

Fig. 8

**INTERNATIONAL SEARCH REPORT**

| International application No. |
|---|
| **PCT/CN2023/072402** |

| A. | CLASSIFICATION OF SUBJECT MATTER |
|---|---|
| | G06T5/00(2006.01)i |

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, CNABS, CNKI, ENTXT, ENTXTC, DWPI: 相机, 摄像, 图像, 图片, 校正, 运动, 噪声, 噪音, 干扰, 像素, camera, image, correct+, motion, noise, pixel

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114140362 A (HANGZHOU MICROIMAGE SOFTWARE CO., LTD.) 04 March 2022 (2022-03-04) entire document | 1-19 |
| X | CN 113177893 A (SHENZHEN MUQI TECHNOLOGY CO., LTD.) 27 July 2021 (2021-07-27) description, paragraphs 5, 8 and 10-14 | 1, 2, 11, 13, 15, 17-19 |
| A | CN 101180652 A (IRCON, INC.) 14 May 2008 (2008-05-14) entire document | 1-19 |
| A | CN 103096117 A (ZHEJIANG DAHUA TECHNOLOGY CO., LTD.) 08 May 2013 (2013-05-08) entire document | 1-19 |
| A | JP 2012252069 A (PANASONIC CORP.) 20 December 2012 (2012-12-20) entire document | 1-19 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 February 2023** | **24 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2023/072402**

| Patent document cited in search report | | | Publication date (day/month/year) | Patent family member(s) | | | Publication date (day/month/year) |
|---|---|---|---|---|---|---|---|
| CN | 114140362 | A | 04 March 2022 | None | | | |
| CN | 113177893 | A | 27 July 2021 | None | | | |
| CN | 101180652 | A | 14 May 2008 | US | 2006228100 | A1 | 12 October 2006 |
| | | | | US | 7622715 | B2 | 24 November 2009 |
| | | | | WO | 2006135459 | A1 | 21 December 2006 |
| | | | | GB | 0722036 | D0 | 19 December 2007 |
| | | | | GB | 2440696 | A | 06 February 2008 |
| | | | | GB | 2440696 | B | 23 February 2011 |
| CN | 103096117 | A | 08 May 2013 | None | | | |
| JP | 2012252069 | A | 20 December 2012 | None | | | |

Form PCT/ISA/210 (patent family annex) (July 2022)

**EP 4 471 707 A1**

**Patent documents cited in the description**

- CN 202210109939